# EUROPEAN PATENT APPLICATION

(11) **EP 4 607 877 A1**
(43) Date of publication of application: **27.08.2025**
(21) Application number: 23884254.6
(22) Date of filing: 29.06.2023
(51) Int. Cl.: H04L 41/0803

(54) **MANAGEMENT METHOD FOR MULTI-RESOURCE-POOL NETWORK, AND CLOUD MANAGEMENT PLATFORM AND APPARATUS**

(30) Priority: 31.10.2022 CN 202211352006; 28.04.2023 CN 202310484280
(71) Applicant: Huawei Cloud Computing Technologies Co., Ltd., Guiyang, Guizhou 550025 (CN)
(72) Inventor: ZHU, Na, Guiyang, Guizhou 550025 (CN); YAO, Bo, Guiyang, Guizhou 550025 (CN); TIAN, Yingjun, Guiyang, Guizhou 550025 (CN); SHEN, Si, Guiyang, Guizhou 550025 (CN)
(74) Representative: Thun, Clemens
(86) International application number: PCT/CN2023/104303
(87) International publication number: WO 2024/093315

(57) **Abstract**

A management method for a multi-resource pool network, a cloud management platform, and an apparatus are provided. The method is applied to a cloud management platform. The cloud management platform obtains service configuration information configured by a tenant on the cloud management platform, where the service configuration information includes one or more of the following: a network identifier, a terminal node identifier, and a terminal node type. The network identifier indicates identifiers of networks including at least two resource pools that establish a network connection, each terminal node corresponds to one resource pool, the resource pools correspond to a plurality of service providers, each resource pool includes a plurality of computing nodes, the plurality of computing nodes are used to run a business of the tenant, and the terminal node type indicates a type of a resource pool corresponding to the terminal node. The cloud management platform creates corresponding terminal nodes for the at least two resource pools based on the terminal node type, and provides the tenant with a unified management tool for a hybrid multi-cloud multi-pool network, simplifying management of the tenant on the hybrid multi-cloud multi-pool network.

## Description

### CROSS-REFERENCE TO RELATED APPLICATIONS

This application claims priorities to Chinese Patent Application No. 202211352006.6, filed with the China National Intellectual Property Administration on October 31, 2022 and entitled "CLOUD COMMUNICATION SYSTEM", and to Chinese Patent Application No. 202310484280.7, filed with the China National Intellectual Property Administration on April 28, 2023 and entitled "MANAGEMENT METHOD AND SYSTEM FOR MULTI-RESOURCE POOL NETWORK", both of which are incorporated herein by reference in their entireties.

### TECHNICAL FIELD

This application relates to the field of computer technologies, and in particular, to a management method for a multi-resource pool network, a cloud management platform, and an apparatus.

### BACKGROUND

With development of cloud computing technologies and growth of enterprise businesses, enterprises may use a plurality of cloud vendors to provide unified computing/storage services to improve cloud infrastructure capabilities and control costs. In the future, a hybrid multi-cloud multi-pool architecture will be a mainstream form to support the enterprise businesses.

The hybrid multi-cloud multi-pool architecture generally includes two or more resource pools. These resource pools are used to run the businesses together. Generally, the businesses require a plurality of resource pools to share business data. That is, an interworking network needs to be constructed between the plurality of resource pools. However, due to natural technical isolation between the plurality of resource pools, for example, the plurality of resource pools are from different vendors and use different network models and communication technologies, currently, configuration for an interworking network between any plurality of resource pools is complex and inefficient. This has always been a pain point of constructing and managing a heterogeneous system. How to resolve a complex network management problem in a hybrid multi-cloud multi-pool architecture is an urgent problem to be resolved currently.

### SUMMARY

This application provides a management method for a multi-resource pool network, a cloud management platform, and an apparatus, to provide a user with a unified management tool for a hybrid multi-cloud multi-pool network, simplifying management of the user on the hybrid multi-cloud multi-pool network.

According to a first aspect, this application provides a management method for a multi-resource pool network. The method is applied to a cloud management platform. In the method, the cloud management platform may provide a network interworking service for a tenant. The cloud management platform obtains service configuration information configured by the tenant for the network interworking service. The service configuration information includes one or more of the following: a network identifier (for example, a segment), a terminal node (for example, an endpoint) identifier, and a terminal node type. The network identifier indicates an identifier of a global network of the tenant. The global network includes a network including at least two resource pools. A network connection may be established between any two resource pools in the at least two resource pools, to implement interworking across resource pools. The at least two resource pools may be from a plurality of service providers (or cloud resource providers). For example, one of the at least two resource pools is from a cloud vendor A, and another resource pool is from a cloud vendor B. Each resource pool generally includes a plurality of computing nodes. The plurality of computing nodes are used to run a business of the tenant. A terminal node indicates one resource pool in the global network of the tenant. Correspondingly, the terminal node identifier uniquely identifies one resource pool, and the terminal node type indicates a type of the resource pool identified by the terminal node identifier. After obtaining the service configuration information, the cloud management platform creates corresponding terminal nodes for the at least two resource pools based on the terminal node type.

According to the foregoing method, the cloud management platform provides a network interworking service. The tenant may configure service configuration information of the network interworking service based on a multi-resource pool network required by a business in actual application, for example, configure a terminal node identifier for identifying each resource pool in a plurality of actual resource pool configurations and a terminal node type indicating each resource pool type. The cloud management platform sequentially creates, based on the terminal node type, terminal nodes corresponding to each resource pool, to construct a global network that may indicate a plurality of resource pools of the tenant, where the plurality of resource pools may be from a plurality of service providers, and are not limited to a plurality of resource pools in a same service provider. A unified management manner for a hybrid multi-cloud multi-pool network is provided for the tenant, simplifying management of the user on the hybrid multi-cloud multi-pool network.

In a possible implementation, any two terminal nodes communicate with each other by default, or a connection status between the terminal nodes is provided for the tenant to perform configuration. Correspondingly, the service configuration information further includes one or more of the following: a terminal node pair, and a connection status of the terminal node pair, where the terminal node pair includes two terminal nodes, and the connection status of the terminal node pair includes connection allowed and/or connection forbidden.

According to the foregoing method, whether a connection between any two resource pools in the plurality of resource pools of the tenant is allowed or forbidden is set based on the terminal node pair and the connection status of the terminal node pair, so that flexibility of configuring interworking between resource pools is provided for the tenant.

In a possible implementation, the service configuration information further includes a routing rule between a network segment included in at least one resource pool and the terminal node.

According to the foregoing method, flexibility of configuring routing rules between network segments in the resource pool and the terminal node is provided for the tenant.

In a possible implementation, the service configuration information further includes a local security policy and an inter-domain security policy.

According to the foregoing method, flexibility of configuring a traffic security policy for interworking between a plurality of resource pools is provided for the tenant, improving traffic security of communication in the resource pool and between resource pools.

In a possible implementation, the method further includes: obtaining one or more of the following configured by the tenant on the cloud management platform: a type of the resource pool, location information of the resource pool, private network VPC information of the resource pool, subnet information of the resource pool, information about an interface for an inter-domain gateway in the resource pool to access the resource pool, and virtual local area network VLAN information.

In a possible implementation, the cloud management platform is further configured to manage a cloud service system, the cloud service system includes a global controller and at least two local controllers, and one local controller corresponds to one of the at least two resource pools. The method further includes: The global controller obtains the service configuration information from the cloud management platform. The global controller sends the service configuration information to each local controller.

According to the foregoing method, the cloud management platform maps, to each resource pool by using the cloud service system, the service configuration information configured by the tenant, and the tenant does not need to care about implementation of an underlying network, simplifying management of the tenant on the hybrid multi-cloud multi-pool network.

In a possible implementation, the method further includes: The local controller invokes a first application programming interface API of an intra-site controller in a corresponding resource pool to send routing information to the intra-site controller.

According to the foregoing method, a standard first API is provided and unified, and the local controller may exchange routing information with an intra-site controller in a resource pool of any type based on the first API, to meet a plurality of business requirements of the tenant.

In a possible implementation, the routing information includes some or all of the following:
a type of a next hop, a VNID of network virtualization technology VxLAN tunnel encapsulation, an outer destination internet protocol IP address of the VxLAN tunnel encapsulation, and an outer destination local area network address MAC address of the VxLAN tunnel encapsulation.

According to the foregoing method, the routing information may be used by the computing node in the resource pool to perform VxLAN packet encapsulation, so that the computing node is directly connected to the inter-domain gateway in one hop, implementing an optimal data plane path.

In a possible implementation, the method further includes: The local controller invokes a second application programming interface API of the intra-site controller in the corresponding resource pool to send a subscription request to the intra-site controller, where the subscription request is used to request to subscribe to a resource change event in the resource pool.

In a possible implementation, the type of the resource pool includes: a homogeneous cloud, a heterogeneous cloud, a virtual resource pool, and a conventional resource pool.

According to the foregoing method, a networking requirement of the tenant for resource pools of different types is met, and a same management manner is provided for hybrid multi-cloud multi-pool networks of various types.

According to a second aspect, this application further provides a cloud management platform. The cloud management platform has a corresponding function of implementing the cloud management platform in the method instance in the first aspect. For beneficial effects, refer to the descriptions of the first aspect. Details are not described herein again. The function may be implemented by hardware, or may be implemented by hardware by executing corresponding software. The hardware or software includes one or more modules corresponding to the foregoing function. In a possible design, a structure of the apparatus includes an obtaining module and a creation module. In a possible design, a first obtaining module and a second obtaining module may be a same module, and a first determining module and a second determining module may be a same module. These modules may perform a corresponding function of the cloud management platform in the method example in the first aspect. For details, refer to the detailed descriptions in the method example. Details are not described herein again.

According to a third aspect, this application further provides a computing device cluster. The computing device cluster includes at least one computing device, and the at least one computing device has a corresponding function of implementing the cloud management platform in the method instance in the first aspect. For beneficial effects, refer to the descriptions of the first aspect. Details are not described herein again. A structure of each computing device includes a processor and a memory. The processor is configured to support the computing device in performing some or all corresponding functions of the cloud management platform in the method in the first aspect. The memory is coupled to the processor, and stores program instructions and data that are necessary for the computing device. A communication interface is further included in the structure of the computing device, and is configured to communicate with another device.

According to a fourth aspect, this application further provides a computer-readable storage medium. The computer-readable storage medium stores instructions, and when the instructions are run on a computer, the computer is enabled to perform the method in any one of the first aspect and any possible design of the first aspect.

According to a fifth aspect, this application further provides a computer program product including instructions. When the computer program product runs on a computer, the computer is enabled to perform the method in any one of the first aspect and any possible design of the first aspect.

According to a sixth aspect, this application further provides a computer chip. The chip is connected to a memory, and the chip is configured to read and execute a software program stored in the memory, to perform the method in any one of the first aspect and any possible implementation of the first aspect.

### BRIEF DESCRIPTION OF DRAWINGS

FIG. 1 is a diagram of an architecture of a VxLAN network model;
FIG. 2 is a diagram of an architecture of a data center;
FIG. 3 is a first diagram of an architecture of a network model;
FIG. 4 is a second diagram of an architecture of a network model;
FIG. 5 is a third diagram of an architecture of a network model;
FIG. 6 is a diagram of an architecture of a possible system according to an embodiment of this application;
FIG. 7A is a diagram of a structure of a possible network interworking service according to an embodiment of this application;
FIG. 7B is another diagram of a structure of a possible network interworking service according to an embodiment of this application;
FIG. 8 is a diagram of a plurality of routing policy configuration manners according to an embodiment of this application;
FIG. 9 is a diagram of an architecture of a forwarding node according to an embodiment of this application;
FIG. 10 is another diagram of an architecture of a possible system according to an embodiment of this application;
FIG. 11 is a schematic flowchart of a method for implementing multi-resource pool communication according to an embodiment of this application;
FIG. 12 is a first diagram of a user interface according to an embodiment of this application;
FIG. 13 is a second diagram of a user interface according to an embodiment of this application;
FIG. 14 is a third diagram of a user interface according to an embodiment of this application;
FIG. 15 is a fourth diagram of a user interface according to an embodiment of this application;
FIG. 16 is a diagram of an architecture of a data plane of a multi-resource pool interworking network according to an embodiment of this application;
FIG. 17 is a diagram of a structure of a computing apparatus according to an embodiment of this application;
FIG. 18 is a diagram of a structure of a computing device according to an embodiment of this application;
FIG. 19 is a diagram of a structure of a computing device cluster according to an embodiment of this application; and
FIG. 20 is another diagram of a structure of a computing device cluster according to an embodiment of this application.

### DESCRIPTION OF EMBODIMENTS

For better understanding of solutions in embodiments of this application, the following first describes some related terms and concepts that may be used in embodiments of this application.

### 1. Overlay (overlay) network

Overlay means establishing a logical network on a physical network. The overlay network is a logical network established on an underlay network. The underlay network is an underlying physical basis of the overlay network. The overlay network has various network protocols and standards, such as a virtual extensible local area network (virtual extensible local area network, VxLAN) and generic routing encapsulation (generic routing encapsulation, GRE). Currently, the VxLAN is a common protocol standard in the overlay network.

### 2. Virtual local area network (Virtual Local Area Network, VLAN)

The VLAN is a network isolation technology that logically divides a physical LAN into a plurality of broadcast domains. The LAN is specified as a local area network. Specifically, in a VLAN technology, a large physical layer 2 domain is divided into many small logical layer 2 domains, and the logical layer 2 domain is referred to as the VLAN. Devices in a same VLAN may communicate with each other at a layer 2. Devices in different VLANs are isolated at the layer 2. In other words, a physical local area network may be divided into a plurality of VLANs. All devices in a VLAN are in a same broadcast domain. Broadcasts cannot be propagated across VLANs.

In general, the VLAN is a network isolation technology. A physical local area network in a data center may be logically divided into a plurality of VLANs. The VLANs are distinguished by VLAN numbers. An address bit of a VLAN number defined in the standard has only 12 bits (bits). That is, a value of an available VLAN number ranges from 1 to 4094, which can meet a requirement of a conventional data center. However, with the development of cloud computing technologies, a quantity of virtual machines in a data center increases by an order of magnitude compared with a quantity of original physical machines. A VLAN isolation capability cannot meet requirements of public clouds or other large-scale virtualized cloud computing services that involve tens of thousands or even more tenants. Therefore, a VxLAN emerges.

### 3. VxLAN

The VxLAN is an extension of the VLAN. It uses a network virtualization technology to virtualize a plurality of layer 2 networks on a physical network device. Specifically, the VxLAN uses a tunneling technology to establish a layer 2 Ethernet network tunnel based on a layer 3 network, to implement cross-region layer 2 interconnection. In other words, the VxLAN can create virtual layer 2 subnets or segments across a physical layer 3 network. Each layer 2 subnet has a VxLAN network identifier (VNI) that uniquely identifies traffic segments. The VNI is 24 bits long and supports a maximum of more than 16 million virtual networks, which can meet ultra-multi-tenant and multi-instance scenarios of a cloud and other large-scale virtual networks.

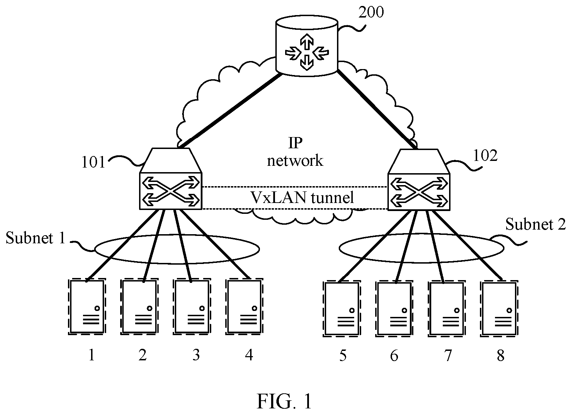

FIG. 1 is a diagram of a VxLAN network model. The network model includes network devices 101, 102, and 200, and a host 1 to a host 8. The network device may be an independent network device, for example, a switch, a router, or a gateway, or may be a server on which a virtual machine is located. Different network devices may have different functions. For ease of description, the network device 101 and the network device 102 are collectively referred to as a layer 2 network device, and the network device 200 is referred to as a layer 3 network device. It should be noted that FIG. 1 shows an example in which the layer 2 network device is a switch and the layer 3 network device is a router. This is not limited in this application.

From a function perspective, the layer 2 network device may connect to one or more hosts, that is, establish connections with one or more hosts, to form a region network. The region network may be a LAN or VLAN, and may be understood as a subnet or broadcast domain. The host may be a server, or may be a computing instance running on the server, for example, a virtual machine or a container. The layer 2 network device may provide a data path for any two hosts in the local area network, to implement communication between any two hosts in the local area network. As shown in FIG. 1, the host 1 (a source host) sends a packet to the host 4 (a destination host), and the network device 101 is configured to: receive the packet sent by the host 1 and forward the packet to the host 4. The layer 3 network device may connect a plurality of local area networks to implement communication between hosts in different local area networks. A larger network formed by the plurality of local area networks may also be referred to as a layer 3 network.

In a VxLAN technology, a plurality of virtual layer 2 networks may be created on a layer 3 network architecture by establishing a VxLAN tunnel. For example, a VxLAN tunnel is established between two layer 2 network devices. In this case, the layer 2 network device may also be referred to as a VxLAN tunnel endpoints (VxLAN tunnel endpoints, VTEP) device (VTEP for short), including a start point (also referred to as a source VTEP) or an end point (also referred to as a destination VTEP) of the VxLAN tunnel. Different virtual layer 2 networks are identified by VNIs. It may be understood as that, one VNI represents one tenant, and an IP address in a same VNI is unique. That is, hosts having a same VNI have different IP addresses, and hosts belonging to different VNIs may have a same IP address. A plurality of hosts connected to one network device may have different VNIs. The VxLAN tunnel is a virtual channel established between two network devices to transmit VxLAN packets.

### 4. Resource pool

The resource pool is a configuration mechanism. It is a logical abstraction for flexible resource management and is used to partition host resources. In other words, one resource pool includes one or more hosts, or the resource pool may be divided based on computing instances, and the computing instances include a virtual machine, a container, and the like. For example, one resource pool includes a plurality of virtual machines.

5. In embodiments of this application, "a plurality of" means two or more than two. The term "and/or" describes an association relationship between associated objects, and indicates that three relationships may exist. For example, A and/or B may indicate the following cases: Only A exists, both A and B exist, and only B exists, where A and B may be singular or plural. "One or more of the following items (pieces)" or a similar expression thereof refers to any combination of these items, including any combination of singular items (pieces) or plural items (pieces). For example, one or more of a, b, or c may indicate a, b, c, a and b, a and c, b and c, or a, b, and c, where a, b, and c may be singular or plural.

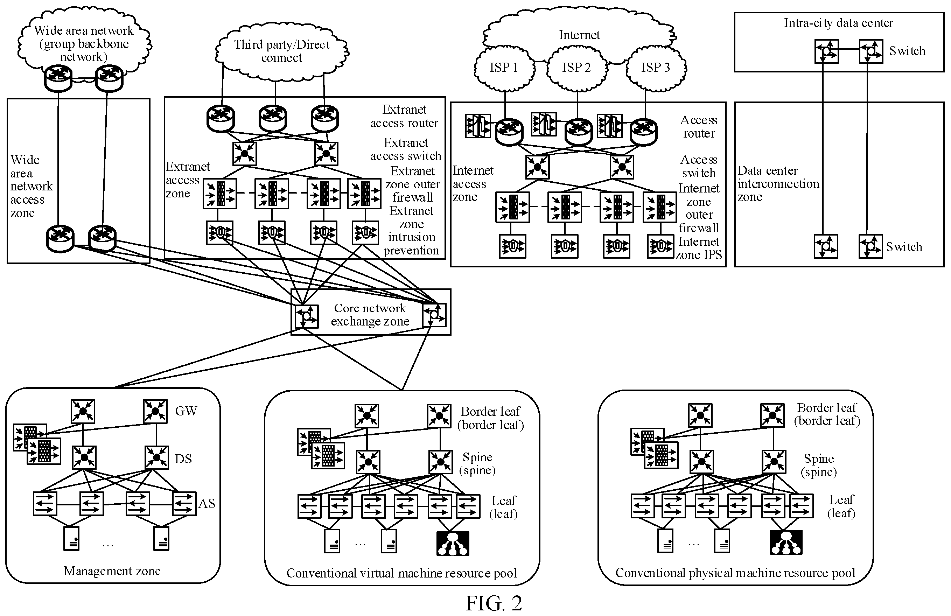

FIG. 2 is a diagram of an architecture of a data center. The physical architecture of the data center includes one or more conventional virtual machine resource pools and one or more conventional physical machine resource pools. Generally, one conventional virtual machine resource pool includes a plurality of virtual machines, and one conventional physical machine resource pool includes a plurality of physical servers. The virtual machine and the physical server may be collectively referred to as computing resources, and these computing resources are used to run an enterprise business.

When the enterprise business runs in a conventional data center, network interworking and network security are provided by hardware devices in the data center. As shown in FIG. 2, layer 2 and layer 3 forwarding of east-west traffic (horizontal traffic, for example, traffic exchanged between virtual machines in the virtual machine resource pool and physical servers in the physical machine resource pool) in physical networking of the data center is implemented by spine/leaf nodes. The leaf node may be a switch responsible for forwarding layer 2 network traffic, and the spine node may be a router responsible for forwarding layer 3 network traffic, or the like. Security protection for the east-west traffic is implemented by a firewall connected to a border leaf in off-path mode. Forwarding of north-south traffic (vertical traffic, where for example, internet users access virtual machines in the virtual machine resource pool through the internet and the virtual machines in the virtual machine resource pool send feedback messages to the internet users) is concentrated to an egress access zone of the data center. In addition to egress routers for traffic forwarding, some security devices such as firewalls/WAFs are deployed in the egress access zone to ensure business security in the data center.

When the enterprise business is migrated to the cloud, that is, after an enterprise customer uses cloud computing resources of a cloud provider to build a cloud locally, from the perspective of entire data center networking, the cloud is integrated into a global network of a data center of the enterprise customer as an independent resource pool and is a part of the data center. The enterprise business is deployed in resource pools. Therefore, the cloud faces a requirement for network interworking across resource pools. For example, office applications of an enterprise customer are deployed in different resource pools in a distributed manner. When back-end data sharing is required, the enterprise customer requires that a global network of a data center support a direct connect (direct connect, DC) interworking network across resource pools and clouds.

The following describes several existing network models for interworking across resource pools.

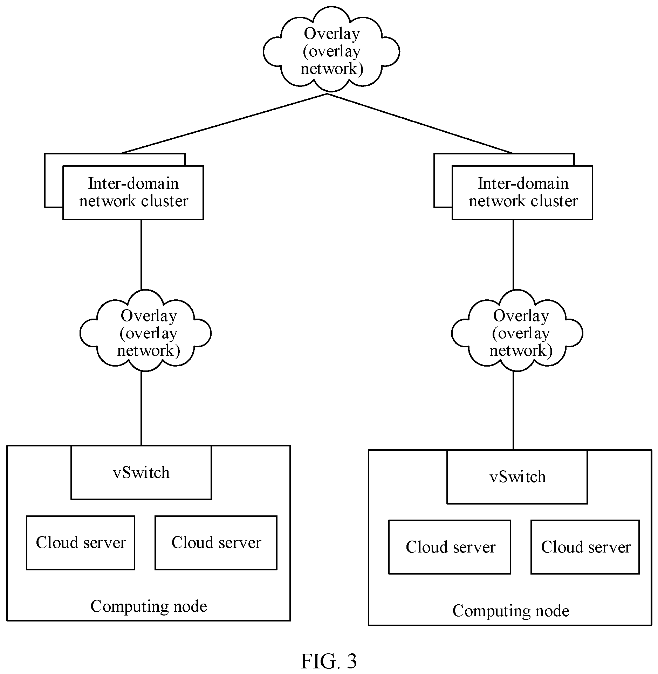

FIG. 3 is a diagram of an architecture of a data plane for interworking across resource pools. As shown in FIG. 3, the cloud system includes two clouds, each cloud includes a plurality of computing nodes (for example, physical servers), a plurality of cloud servers (for example, virtual machines) may be created on each computing node, and the cloud server is configured to process a business of a tenant. Inter-domain interworking is implemented by x86 servers in an inter-domain gateway cluster. An overlay architecture, for example, a VxLAN architecture, is used in the cloud. A vSwitch (software) may be used for VTEP encapsulation on each computing node. The computing node and the inter-domain gateway cluster are directly connected in one hop.

In this solution, because the inter-domain gateway is implemented by the x86 server, costs are high. In addition, computing power is provided by only a CPU of the x86 server. As a result, the CPU is prone to become a bottleneck. When traffic pressure is heavy, an inter-domain communication delay increases, and stability also deteriorates. In addition, the architecture used in this solution applies only to homogeneous clouds and does not support heterogeneous clouds, conventional virtual machine resource pools, or conventional physical machine resource pools. The homogeneous clouds mean that a plurality of clouds are provided by a same cloud provider. For example, in FIG. 3, when two clouds are provided by a same cloud provider, the two clouds are homogeneous clouds. On the contrary, if the two clouds are provided by different cloud providers, the two clouds are heterogeneous clouds.

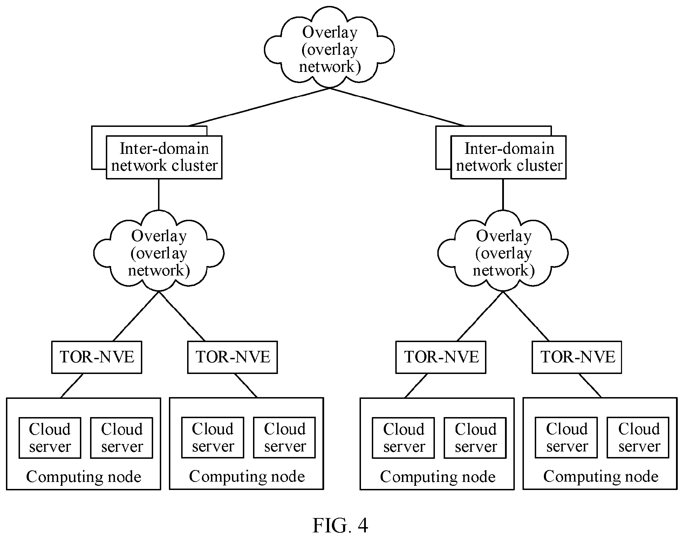

FIG. 4 is another diagram of an architecture of a data plane for interworking across resource pools. As shown in FIG. 4, a hardware device (for example, a TOR-NVE) is used in a cloud to perform overlay encapsulation, and an inter-domain gateway is also implemented by using hardware. Both the inter-domain gateway and the TOR-NVE automatically deliver configurations by using an SDN controller (not shown in FIG. 4), so that an optimal path between a computing node and an inter-domain gateway can be implemented.

This solution is generally used by network device vendors that have hardware SDN controllers. The SDN controller manages devices (such as TOR-NVEs) and inter-domain gateways in a resource pool in a unified manner. However, an intra-domain solution that uses a current mainstream vSwitch for overlay is not supported. In addition, the architecture used in this solution can be applied only to homogeneous clouds, not heterogeneous clouds.

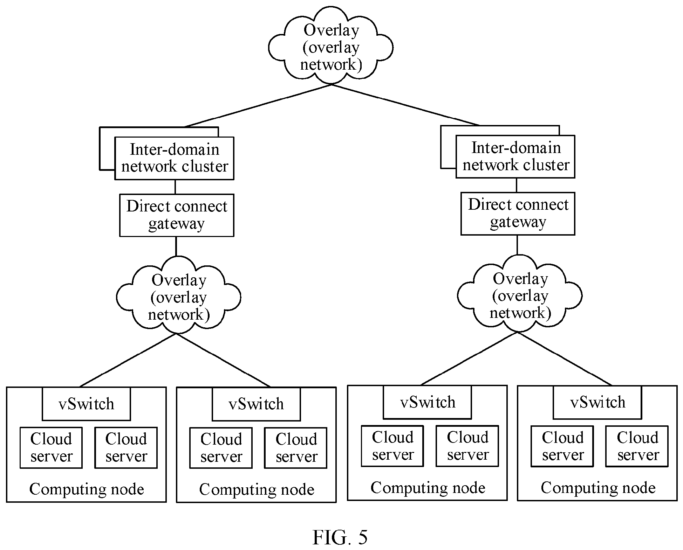

FIG. 5 is still another diagram of an architecture of a data plane for interworking across resource pools. This solution depends on a direct connect capability provided by a resource pool for the external, and allows a third party to access a direct connect gateway in the resource pool by using an inter-domain gateway. A plurality of clouds may access an inter-domain gateway cluster of a same third party to implement interworking across resource pools. Refer to FIG. 5. In this architecture, an overlay architecture is used in a cloud, a vSwitch may be used for VTEP encapsulation in a domain, and the inter-domain gateway implements interworking through an intra-domain network of the direct connect gateway.

This solution supports both homogeneous clouds and heterogeneous clouds and has higher compatibility. However, this solution depends on the direct connect capability provided in the domain. A direct connect configuration is complex, a data plane path is long, and a delay is long.

It can be learned that, currently, multi-cloud multi-pool networks differ greatly, configurations are complex, and efficiency is low. Network functions in different resource pools are similar, but network model abstractions are different. Multi-site networks are isolated and cannot be managed and controlled in a centralized manner. If no unified management tool is available, network administrators need to manually combine complex networks of resource pools of different types. It is very difficult to configure and manage. An enterprise customer is eager to implement unified configuration, management, and operations and maintenance of networks across resource pools. However, currently, no vendor can provide a unified management tool for hybrid multi-cloud multi-pool deployment to resolve complex network management problems for the enterprise customer.

In view of this, embodiments of this application provide a general-purpose network interworking service for hybrid multi-cloud multi-pool deployment. The network interworking service may support multi-cloud at a platform as a service (platform as a service, PaaS) layer, and implement automatic network connection at an infrastructure as a service (infrastructure as a service, IaaS) layer. A tenant leases the service to implement unified configuration, management, and operations and maintenance of a multi-resource pool network.

The following describes in detail the technical solutions in embodiments of this application with reference to specific accompanying drawings.

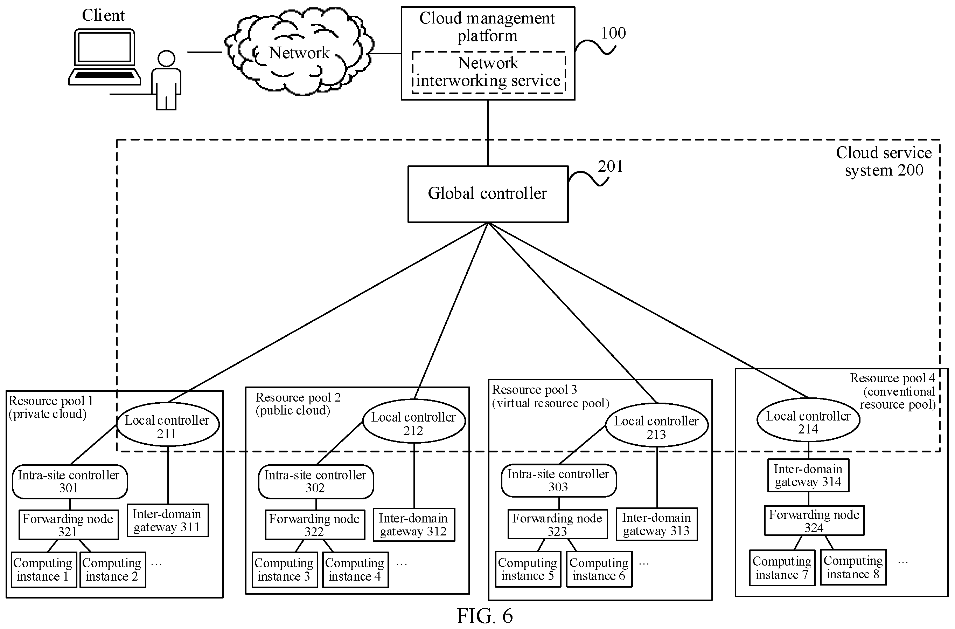

FIG. 6 is a diagram of a possible application scenario according to an embodiment of this application. In this application scenario, a cloud vendor provides a cloud service. For example, the cloud service includes but is not limited to a network interworking service and a cloud computing service. A system supporting the network interworking service includes a cloud management platform 100 and a cloud service system 200.

Functions of the cloud management platform 100 include: providing an access interface (for example, an interface or an API). A tenant (for example, the foregoing enterprise customer or another user having a requirement for establishing interworking between a plurality of resource pools) may operate a client remote access interface to register a cloud account and a password on the cloud management platform 100, and log in to the cloud management platform 100. After the cloud account and the password are successfully authenticated by the cloud management platform 100, the tenant may further select and purchase a cloud service and/or a cloud resource on the cloud management platform 100. After the purchase is successfully done, the cloud management platform 100 instructs the cloud resource to provide a service for the tenant.

For example, the cloud service and/or the cloud resource is, for example, a virtual machine. The tenant may select a specification (memory, processor, and disk) and a quantity of virtual machines on the cloud management platform 100. After the tenant pays fee successfully, the cloud management platform 100 instructs a cloud computing node to create a corresponding quantity of virtual machines with a corresponding specification, and opens remote desktops of these virtual machines. The cloud management platform 100 provides a connection account and a password of each remote desktop to the tenant, so that the tenant can remotely log in to the virtual machine by using the account and the password. It should be noted that the cloud service and/or the cloud resource may alternatively be various cloud services such as a container, a bare metal server, and an elastic IP (EIP). A cloud service type is not limited in this embodiment of this application. The tenant may purchase cloud resources from the cloud vendor to establish a resource pool to run a business of the tenant. Certainly, in this application, the tenant may alternatively lease a cloud resource of another cloud vendor to construct a resource pool. This is not specifically limited in this application.

For another example, the cloud service is, for example, a network interworking service. When the tenant has a requirement for establishing interworking between a plurality of resource pools, the tenant may purchase the network interworking service on the cloud management platform 100 and configure service configuration information included in the network interworking service. The service configuration information obtained after configuration may indicate a communication requirement of the tenant for the plurality of resource pools. For example, the communication requirement of the tenant may include resource pools in which the business of the tenant is deployed, and resource pools between which interworking needs to be established (that is, a network connection is established). Specifically, for example, the business of the tenant is deployed in four resource pools shown in FIG. 6. Any two resource pools in the four resource pools need to communicate with each other, or some resource pools in the four resource pools need to communicate with each other. For example, a resource pool 1 needs to communicate with a resource pool 2, the resource pool 2 needs to communicate with a resource pool 3, and the resource pool 1 does not communicate with the resource pool 3.

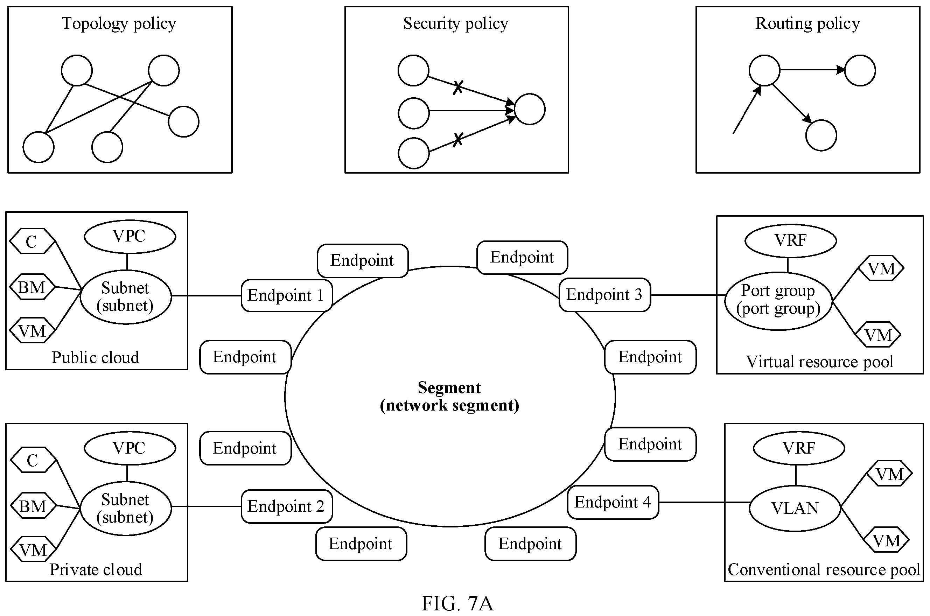

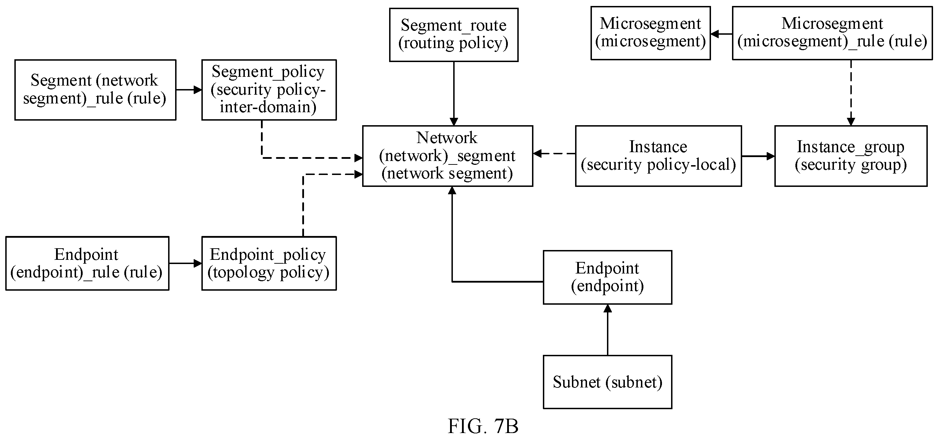

Specifically, an embodiment of this application provides a network interworking model. A network interworking service in this embodiment is implemented based on the network interworking model. Refer to FIG. 7A and FIG. 7B for understanding. Specifically, the network interworking service includes the network interworking model and various policies applied to the network interworking model, such as a topology policy, a security policy, and a routing policy.

FIG. 7A is an example of a diagram of a network interworking model according to this embodiment. As shown in FIG. 7A, the network interworking model includes a network segment (segment) and an endpoint (endpoint) (which may also be referred to as a terminal node). The segment is an object that provides global routing interworking, and may indicate a global network of a communication system including a plurality of resource pools. A plurality of endpoints may be added to the segment. Each endpoint indicates a resource pool. The "endpoint" herein may also be understood as a connection. One end of the endpoint is connected to the segment, and the other end is connected to a network segment of resource pools of different types. The tenant may add an endpoint to configure information about a corresponding resource pool. The information about the resource pool includes information such as a type of the resource pool, a subnet segment, and a VPC.

The network interworking model further includes a connection between endpoints. Resource pools indicated by two endpoints that have a connection communicate with each other, and resource pools indicated by two endpoints that do not have a connection do not communicate with each other. In an optional design, any two endpoints in the segment naturally have a connection, and this does not need to be configured by the tenant. In other words, after the tenant configures a resource pool connected to an endpoint, resource pools indicated by any two endpoints in the segment communicate with each other by default. In another optional design, by default, all endpoints in the segment have a connection relationship or all endpoints in the segment have no connection relationship, and whether there is a connection between two endpoints in the segment may be specified by the tenant. For example, the cloud management platform 100 provides a topology policy and the like for the tenant to specify whether there may be a connection between resource pools connected to two endpoints. It can be learned that the endpoint in the network interworking model is irrelevant to the type of the resource pool, and may be understood as an abstraction of resource pools of a plurality of types. Therefore, a network between resource pools of any type may be constructed based on the network interworking model.

Specifically, the topology policy is used to flexibly set a connection between any two endpoints in the segment, that is, whether the two endpoints can communicate with each other. If there is a connection between the two endpoints, it indicates that the two endpoints can communicate with each other. If there is no connection between the two endpoints, it indicates that the two endpoints cannot communicate with each other. An example in which the resource pool 1 to the resource pool 4 shown in FIG. 6 are added is used. The tenant may add four endpoints to the segment: an endpoint 1 to an endpoint 4, where the endpoint 1 to the endpoint 4 respectively indicate the resource pool 1 to the resource pool 4. The tenant adds an endpoint pair, for example, the endpoint 1 and the endpoint 3, to the topology policy, and sets a connection as forbidden, indicating that the resource pool 1 and the resource pool 3 do not communicate with each other. The following describes a specific configuration manner. Details are not described herein.

In an embodiment, this embodiment further provides a routing policy applied to a network interworking model. Specifically, the routing policy refers to that each segment has a route table, the route table may include a plurality of entries, and each entry includes a destination network segment and a next hop. The tenant may configure an iterative route in the route table, and flexibly specify a next hop for accessing a destination network segment.

For example, it is assumed that a network segment of the resource pool 1 is a subnet 1, and a network segment of the resource pool 2 is a subnet 2. The route table of the segment includes: an entry 1: a destination network segment is the subnet 1, and a next hop of the subnet 1 is an endpoint 1, indicating that the subnet 1 is connected to the endpoint 1; and an entry 2: a destination network segment is the subnet 2, and a next hop of the subnet 2 is an endpoint 2, indicating that the subnet 2 is connected to the endpoint 2.

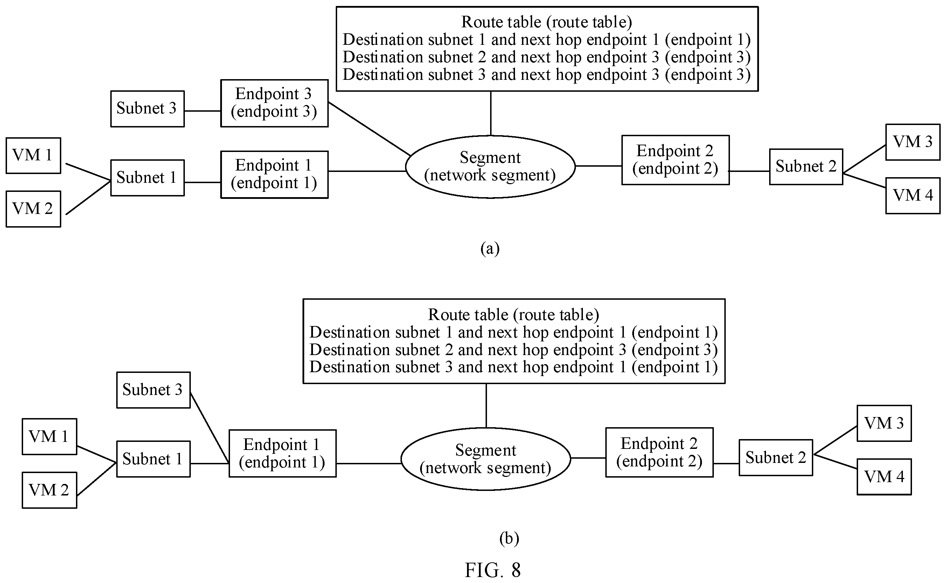

When the tenant wants to add a subnet (assuming that the subnet is a subnet 3) of the resource pool 3 to a global network, there are two configuration manners. In one manner, as shown in (a) in FIG. 8, the tenant adds a new endpoint, for example, an endpoint 3, to the segment, and the endpoint 3 is connected to the subnet 3. In another manner, the tenant directly configures the route table of the segment, and does not need to add an endpoint to the segment. For example, as shown in (b) in FIG. 8, the subnet 3 may be connected to an existing endpoint of the segment, for example, an endpoint 1 or an endpoint 2. Correspondingly, the tenant only needs to add an entry 3 to the route table of the segment: a destination network segment is the subnet 3, and a next hop of the subnet 3 is the endpoint 1.

In an embodiment, this embodiment further provides a security policy applied to a network interworking model. The security policy may be used to configure a traffic protection degree between connected resource pools, to ensure traffic security between the resource pools. Specifically, the security policy in this embodiment includes a local security policy and an inter-domain security policy. The local security policy is used to protect traffic security of computing nodes in the resource pool. The inter-domain security policy is used to protect inter-domain traffic security. The inter-domain security policy is applied to a security model provided in this embodiment. The following describes an architecture of the security model.

It can be learned that the network interworking model is an abstract expression of a global network including a plurality of resource pools, and is irrelevant to network implementation of an independent resource pool. That is, a network interworking service may shield a network model difference between different resource pools, so that the tenant can implement unified management of a hybrid multi-cloud multi-pool network.

After the tenant completes configuration of the service configuration information and successfully pays the fee, the cloud management platform 100 instructs the cloud service system 200 to provide a service for the tenant. For example, the cloud service system 200 manages a plurality of resource pools based on the service configuration information. A management scope includes establishing a network connection between the plurality of resource pools based on the service configuration information, mapping each policy configured by the tenant to a network model of the resource pool, and finally making the service take effect in the resource pool. While providing the service for the tenant, the cloud service system 200 ensures that there is a network connection that meets a requirement of the tenant between the plurality of resource pools, and runs according to a policy configured by the tenant. Certainly, subsequently, the tenant may also modify the service configuration information based on a new communication requirement, to adjust a network connection status between the plurality of resource pools.

The following describes, with reference to the cloud service system 200 shown in FIG. 6, an architecture of network implementation of multi-resource pool interworking.

Return to FIG. 6. The cloud service system 200 includes a global controller 201 and a plurality of local controllers (for example, a local controller 211 to a local controller 214 in FIG. 6).

The global controller 201 is responsible for global resource processing and configuration delivery. For example, the global controller 201 obtains service configuration information from the cloud management platform 100, and sends the service configuration information (or network configuration information related to the service configuration information) to the local controller 211 to the local controller 214. Then, the local controller 211 to the local controller 214 promote interworking between the plurality of resource pools of the tenant based on the service configuration information/network configuration information.

The local controller 211 to the local controller 214 are configured to communicate with the global controller 201, for example, receive the service configuration information/network configuration information sent by the global controller, and establish a network connection across resource pools based on the service configuration information/network configuration information. For another example, one or more policies that are configured by the tenant and that are included in the service configuration information/network configuration information are mapped to the resource pool.

In an example, a relationship between the local controller and the resource pool is 1: 1, that is, one local controller is allocated for one resource pool, or one local controller is responsible for managing one resource pool. As shown in FIG. 6, the local controller 211 is configured to manage the resource pool 1, the local controller 212 is configured to manage the resource pool 2, the local controller 213 is configured to manage the resource pool 3, and the local controller 214 is configured to manage the resource pool 4. In another example, a relationship between the local controller and the resource pool is n:1, where n is a positive integer, that is, a plurality of local controllers may be allocated for one resource pool, and the plurality of local controllers serve as hot backup for each other, or the plurality of local controllers jointly manage a site. For ease of description, the following uses an example in which one local controller is allocated for one resource pool for description.

The following describes the resource pool.

A type of the resource pool to which this embodiment is applicable includes a cloud type and a non-cloud type. The cloud type includes but is not limited to a private cloud, a public cloud, a hybrid cloud, an edge cloud, and the like. The non-cloud type includes but is not limited to a virtual resource pool, a conventional resource pool, and the like. Types of a plurality of resource pools of a same tenant is not limited in this embodiment of this application. For example, in FIG. 6, the resource pool 1 may be a private cloud, the resource pool 2 may be a public cloud, the resource pool 3 may be a virtual resource pool, and the resource pool 4 may be a conventional resource pool. Resource pools of different types may have different architectures. First, a private cloud is used as an example to describe an architecture of a resource pool of a cloud type in this embodiment.

As shown in FIG. 6, the private cloud includes an intra-site controller 301, an inter-domain gateway 311, a forwarding node 321, and a plurality of computing instances.

The computing instance is used to run a business of the tenant, and includes but is not limited to a virtual machine, a container, a bare metal server, and the like. Alternatively, a plurality of computing instances may be created on one physical computing node by using a virtualization technology. The computing node may be, for example, a server or a desktop computer.

The computing instance included in the private cloud may be leased by the tenant from any cloud vendor, for example, may be leased from a cloud vendor that provides the network interworking service, or may be leased from another cloud vendor. This is not limited in this application. When the private cloud and the cloud management platform 100 are provided by a same cloud vendor, the private cloud may be referred to as a homogeneous cloud. When the private cloud and the cloud management platform 100 are provided by different cloud vendors, the private cloud is a heterogeneous cloud. In other words, the plurality of resource pools in this embodiment of this application support both a homogeneous cloud and a heterogeneous cloud. For example, the private cloud in FIG. 6 is a homogeneous cloud, and the public cloud in FIG. 6 is a heterogeneous cloud, or both the private cloud and the public cloud in FIG. 6 are homogeneous clouds, or both are heterogeneous clouds.

The forwarding node 321 is configured to forward a packet, for example, receive a packet sent by a computing instance and forward the packet to a next hop, or forward a packet to a computing instance. Specifically, the forwarding node is configured to forward a packet between computing instances in a same subnet, for example, forward a packet of computing instances 1 in a same subnet of the resource pool 1 to a computing instance 2 in the subnet. In this embodiment, an overlay architecture, such as a VxLAN network, is further supported in the resource pool. When the forwarding node 321 is used as a VTEP endpoint, the forwarding node 321 is specifically configured to: perform VxLAN encapsulation on a packet of a computing node, and send an encapsulated packet to another VTEP endpoint (for example, the inter-domain gateway 311).

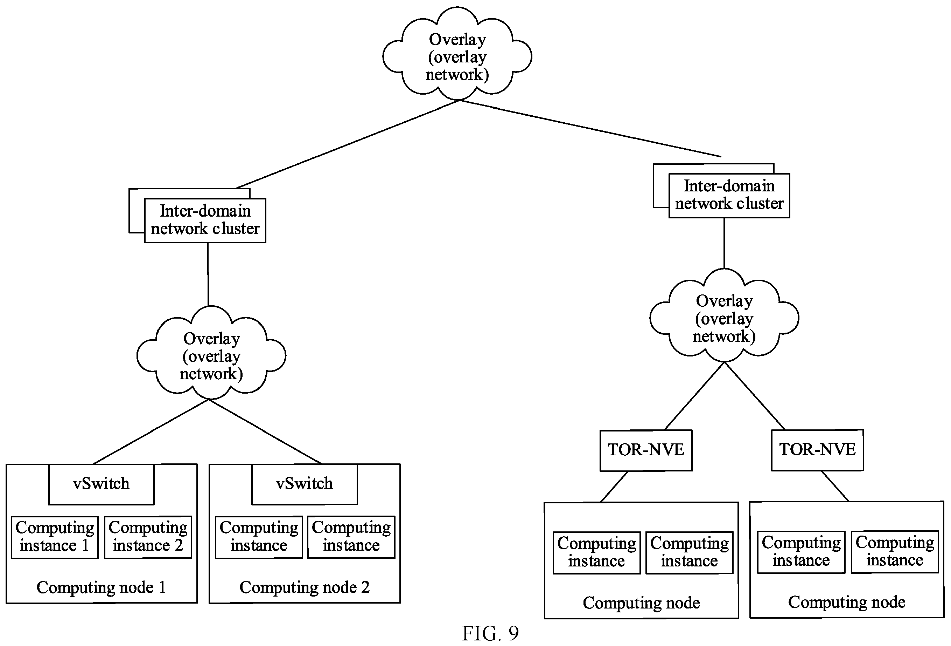

As shown in FIG. 9, in this application, the forwarding node may be software, for example, a vSwitch. The vSwitch may be deployed on a computing node. When a plurality of computing instances are created on one computing node, the computing node is a forwarding node of the plurality of computing instances. Alternatively, the forwarding node may be hardware, for example, any forwarding device that has a network communication function and a data processing function, such as a TOR-NVE, to meet a multi-scenario requirement.

The inter-domain gateway 311 is configured to implement communication across resource pools, that is, forward a packet of a computing instance in a resource pool in which the inter-domain gateway 311 is located to an inter-domain gateway in another resource pool, for example, an inter-domain gateway 312. The resource pool 2 is used as an example. In a scenario, the resource pool 1 and the resource pool 2 use an overlay architecture, and a VxLAN tunnel is established between the inter-domain gateway 311 and the inter-domain gateway 312. The inter-domain gateway 311 is used as a VTEP endpoint, and is specifically configured to: perform VxLAN encapsulation on a packet of a computing instance in the resource pool 1, and forward an encapsulated VxLAN packet to another VTEP endpoint, for example, the inter-domain gateway 312 in the resource pool 2, to implement traffic interworking across resource pools.

Specifically, the inter-domain gateway in this embodiment may be a hardware gateway or a software gateway. If there is a networking condition, a hardware gateway may be deployed. The hardware inter-domain gateway can support a large-scale and high-performance communication network, and meet a requirement of an enterprise customer for device reuse and high performance. If there is no networking condition, a software gateway may be deployed on the computing node. Optionally, the local controller 211 has a standard southbound interface, and supports interconnection with hardware devices of different vendors, for example, an inter-domain gateway. Therefore, the inter-domain gateway 311 in this embodiment may be a device (which may be referred to as a one-party inter-domain gateway) of a cloud vendor that provides a network interworking service, or may be a device (which may be referred to as a third-party inter-domain gateway) of another vendor. When the inter-domain gateway is the one-party inter-domain gateway, correspondingly, the cloud service system 200 further includes an inter-domain gateway (for example, at least one of the inter-domain gateway 311 to an inter-domain gateway 314 in FIG. 6).

The intra-site controller 301 is configured to manage a route and a resource change in a private resource pool, for example, virtual machine migration, IP address migration, and IP address addition or deletion. It should be noted that the intra-site controller 301 is an original management and control plane device in the private cloud, and is configured to: deliver routing information to the forwarding node, manage a resource change in a VxLAN network in the resource pool, and the like. It should be noted that, to be compatible with an original hardware architecture of an existing resource pool, an intra-site controller may not need to be deployed in all resource pools. As shown in FIG. 6, there is no intra-site controller in the conventional resource pool.

The foregoing uses the private cloud as an example to describe the architecture of the resource pool of the cloud type. Different from the resource pool of the cloud type, the virtual resource pool does not use the overlay architecture and is a pure VLAN network. Therefore, resource changes such as virtual machine migration do not exist, and the inter-domain gateway only needs to provide a VLAN access capability. No intra-site controller is deployed in the conventional resource pool. Therefore, there is no automatic control. The local controller controls the inter-domain gateway and does not need to interact with the resource pool. For resource pools of different types, the local controller may use different management policies. This is described in detail in the following.

It should be noted that, the cloud service system 200 may be specifically established by the cloud vendor after the cloud vendor learns a communication requirement of the tenant, to meet the communication requirement of the tenant, and is configured to provide the network interworking service for the tenant, and does not exist originally. The cloud service system 200 may be automatically created. For example, the cloud management platform 100 instructs a computing node in the cloud to create (for example, install) the global controller 201 and the plurality of local controllers, or the cloud service system 200 may be manually created by a cloud vendor personnel. This is not specifically limited.

Specifically, the global controller 201 and the local controller 211 to the local controller 214 may be distributed software systems, or the global controller 201 and the local controller 211 to the local controller 214 may be distributed hardware systems that implement the foregoing software functions. The distributed software system is used as an example. The global controller 201 may be installed in a computing node configured to run the cloud management platform 100, or in an independent computing node outside the cloud management platform 100. The local controller may be deployed near a global controller side, or deployed in the resource pool. In consideration of saving a network bandwidth for communication in the resource pool, the local controller is usually deployed in a corresponding resource pool, for example, deployed on a computing node in the resource pool, or deployed on a server dedicated to running the local controller. This is not specifically limited. In this way, management and control of a global layer and a local layer in the cloud service system 200 are separated, and the local controller 211 manages and controls a nearby resource pool, and shields a difference between different resource pools from the global controller 201.

The network interworking service provided in this embodiment is a unified tool for the tenant to construct and manage an interworking network between a plurality of resource pools. The tenant only needs to configure the network interworking service on the cloud management platform 100 to express a communication requirement. The cloud management platform 100 maps the communication requirement of the tenant to the plurality of resource pools by using the cloud service system 200, and finally make the requirement take effect in each resource pool, so that the network between the plurality of resource pools is automatically connected. In addition, the network interworking service supports a resource pool of any type of the tenant, to meet a requirement of a plurality of scenarios. The tenant does not need to care about a problem of implementation of an underlying network. Subsequently, the tenant may continue to perform unified management and operations and maintenance on the interworking network between the plurality of resource pools by using the network interworking service, so that creation, managing, and other manners of the tenant for a hybrid multi-cloud multi-pool interworking network are simpler, more convenient, and more efficient. This resolves a complex network management problem of the enterprise customer.

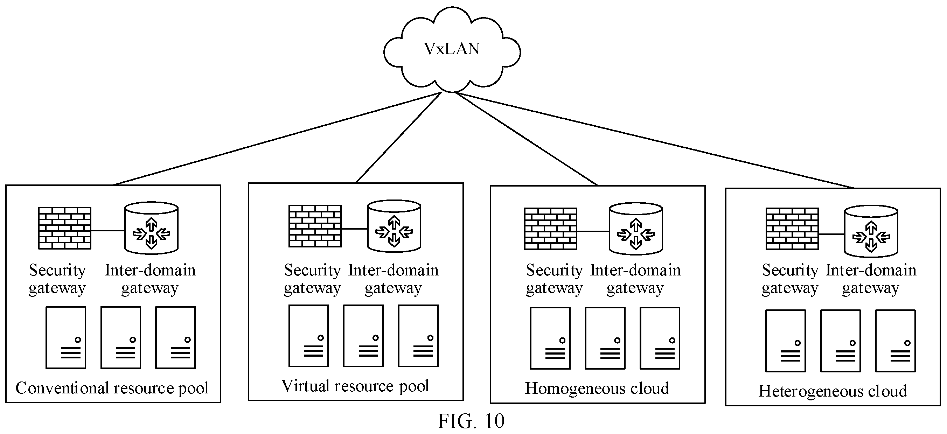

It should be noted that, for brevity, FIG. 6 shows only a few devices. For example, in actual application, the inter-domain gateway in FIG. 6 may be an independent inter-domain gateway, or may be replaced with an inter-domain gateway cluster. In addition, it should be noted that the architecture shown in FIG. 6 is merely a possible example. However, a person of ordinary skill in the art should understand that the system architecture in actual application may further include more, fewer, or different components than/from those shown in the figure, and the shown components may be combined or divided in any manner. This is not specifically limited in this application. As shown in FIG. 10, this embodiment further provides a diagram of an architecture of a security model. Based on FIG. 6, in FIG. 10, the cloud service system 200 further includes a security gateway deployed in each resource pool of the tenant. The security gateway may be a hardware gateway or a software gateway, and is configured to perform security protection on inter-domain (between resource pools) traffic, for example, filter a packet received by the inter-domain gateway, to improve security of the inter-domain traffic.

The foregoing describes related content of providing the network interworking service for the tenant. The following describes a specific embodiment process of constructing a multi-resource pool interworking network by using the network interworking service.

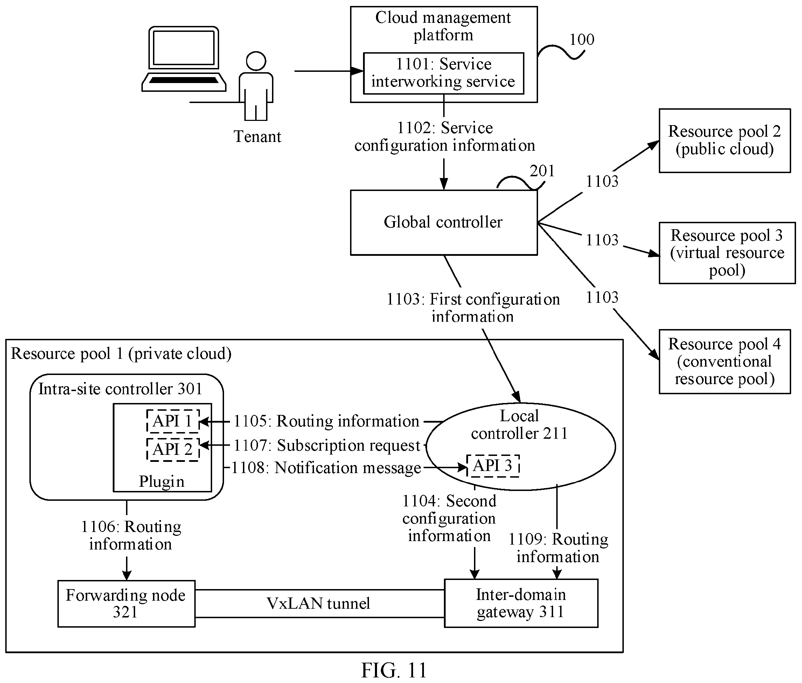

The following describes, by using an example applied to the system shown in FIG. 6 or FIG. 10, a management method for a multi-resource pool network according to embodiments of this application. FIG. 11 is an example of a schematic flowchart of a management method for a multi-resource pool network according to an embodiment of this application. For brevity, FIG. 11 shows only an information exchange procedure in one resource pool. As shown in FIG. 11, the method may include the following steps.

Step 1101: A cloud management platform 100 obtains service configuration information entered or selected by a tenant on the cloud management platform 100.

As described above, the cloud management platform 100 may provide an access interface, for example, an interface or an API, for the tenant to configure a service parameter. The following describes in detail the two configuration manners.

Configuration manner 1: Perform configuration on a user interface.

The cloud management platform 100 may provide a console (console) user interface for the tenant to perform configuration.

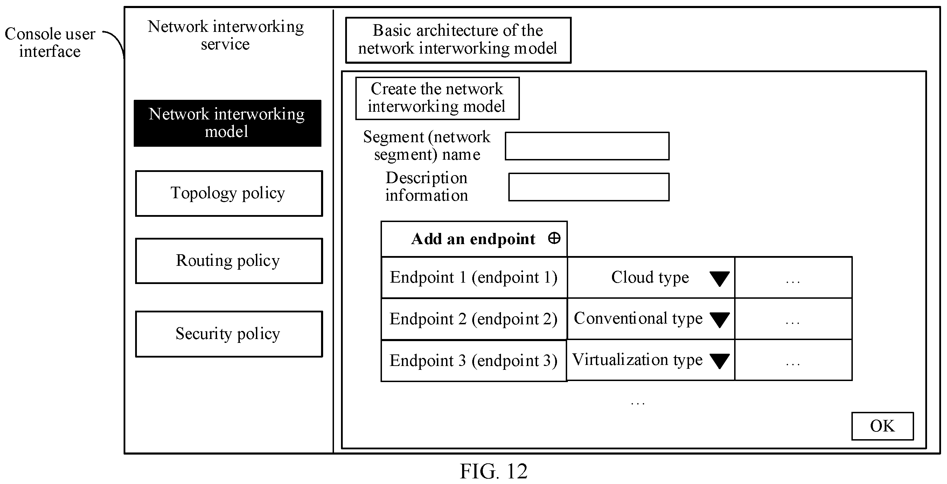

FIG. 12 is a diagram of a console user interface (user interface for short) according to an embodiment. As shown in FIG. 12, the tenant may configure a parameter in a related attribute of the user interface based on a communication requirement of the tenant for a plurality of resource pools. For example, referring to a left menu bar in FIG. 12, an attribute of a network interworking service provided by a cloud vendor includes but is not limited to a network interworking model, a topology policy, a routing policy, a security policy, and the like. After the tenant selects any one of the foregoing specific attributes, the user interface may present a related attribute configuration item of the network interworking service. As shown in FIG. 12, after the tenant selects the network interworking model, a related configuration item of the network interworking model is displayed on a right side of FIG. 12, so that the tenant performs selection or entering to complete configuration of a related parameter of the network interworking service.

Therefore, the service configuration information includes the related attribute configuration item of the network interworking service provided by the user interface and a parameter entered or selected by the tenant for each attribute configuration item.

The following describes the foregoing attributes and related configuration items separately.

### I. Basic architecture of the network interworking model

Still refer to FIG. 12. A configuration item of the basic architecture of the network interworking model may include but is not limited to a segment configuration item and/or an endpoint configuration item. The segment configuration item includes but is not limited to one or more of the following: a segment name, segment description information, a VxLAN network identifier (VxLAN Network Identifier, VNI) (not shown in FIG. 12) used for performing VxLAN encapsulation on traffic for interworking across resource pools, and the like.

The segment name and the segment description information are edited by the tenant, for ease of viewing by the tenant. For example, the segment name is a business 1 network, and the description information is that the business 1 network includes four resource pools of a cloud vendor A and a cloud vendor B. Certainly, this is merely an example, and the name and the description information may be other content. A VNI for performing VxLAN encapsulation on traffic for interworking across clouds may be automatically allocated by the cloud management platform 100. For example, an idle VNI is randomly selected from a VNI pool, and does not need to be entered by the user.

For the endpoint, different types of resource pools have different endpoint configuration items. The type of the resource pool includes a cloud type and a non-cloud type, and the non-cloud type may be further classified into a conventional type and a virtualization type, which are separately described as follows.

### (1) Cloud type

The cloud type indicates that a resource pool connected to the endpoint is a VPC subnet on the cloud. The cloud includes but is not limited to a public cloud, a private cloud, a hybrid cloud, an edge cloud, and the like. An endpoint configuration item of the cloud type includes but is not limited to one or more of the following:
1. Cloud location information: may also be referred to as a cloud identifier, for uniquely identifying a resource pool. Specifically, the cloud location information includes information required for communication between a global controller and a local controller in the cloud, and information required for communication between the local controller in the cloud and an intra-site controller in the cloud. The global controller delivers the information to the local controller in the cloud. The local controller in the cloud delivers address information (for example, an IP address) and account information required by the intra-site controller in the cloud.
2. VPC information on the cloud: used by a local controller in the cloud to deliver routing information to a intra-site controller, and the like.
3. VPC subnet information on the cloud: used by a local controller in the cloud to deliver routing information to an inter-domain gateway in the cloud, and the like.

### (2) Conventional type

The conventional type indicates that a type of a resource pool connected to the endpoint is a non-cloud type, which is specifically a conventional resource pool type in the non-cloud type. An endpoint configuration item of the conventional type includes but is not limited to one or more of the following:
1. Resource pool location information: may also be referred to as a resource pool identifier, for uniquely identifying a resource pool. Specifically, the resource pool location information includes information required for communication between a global controller and a local controller in the cloud, and address information (for example, including an IP address of a device like an intra-site controller) and account information used for authentication that are required by the global controller to deliver to a local controller in the resource pool.
2. Subnet information of the resource pool: used by a local controller in the resource pool to deliver routing information to an inter-domain gateway in the resource pool, and the like.
3. Information about an interface for an inter-domain gateway to access the resource pool and VLAN information: used by a local controller in the resource pool to deliver routing information to an inter-domain gateway in the resource pool, and the like.

### (3) Virtualization type

The virtualization type indicates that a type of a resource pool connected to the endpoint is a virtual resource pool. An endpoint configuration item of the virtualization type includes but is not limited to one or more of the following:
1. Resource pool location information: used by a local controller in the resource pool to deliver address information (for example, including an IP address) and account information used for authentication that are required by an intra-site controller in the resource pool.
2. Subnet information of the resource pool: used by a local controller in the resource pool to deliver routing information to an inter-domain gateway in the resource pool, and the like.
3. Information about an interface for an inter-domain gateway to access the resource pool and VLAN information: used by a local controller in the resource pool to deliver routing information to an inter-domain gateway in the resource pool, and the like.

After entering or selecting information about the foregoing configuration items, the tenant clicks an OK button. The cloud management platform creates an endpoint corresponding to each resource pool in the segment.

### II. Topology policy

As described above, the topology policy is used to flexibly set a connection between any two endpoints in a segment. For example, the topology policy includes but is not limited to one or more of the following information:
Endpoint pair: Two endpoints are specified.
Connection: allowed or forbidden.

According to the topology policy, the tenant may specify a connection between specific two endpoints in the segment. Resource pools corresponding to two endpoints between which a connection is allowed communicate with each other. Resource pools corresponding to two endpoints between which a connection is forbidden do not communicate with each other, that is, there is no connection between the two endpoints, and the two endpoints cannot communicate with each other.

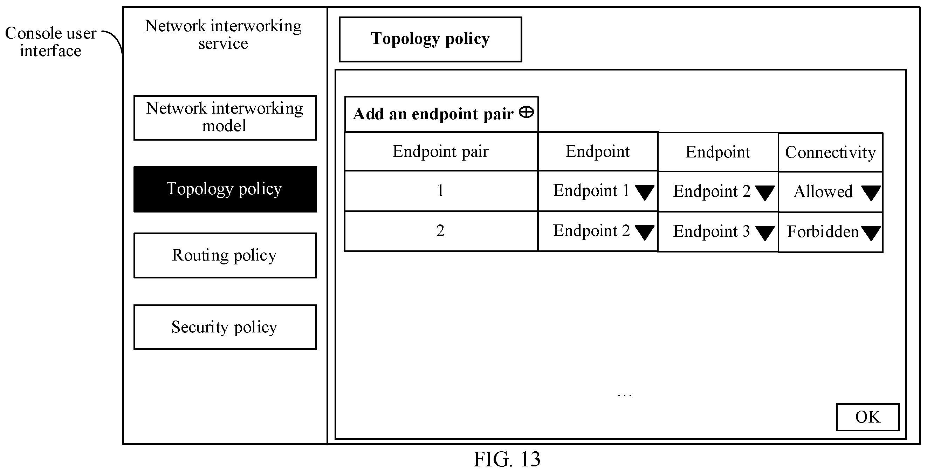

For example, FIG. 13 is a diagram of a user interface of a topology policy according to an embodiment of this application. In this embodiment, a communication requirement of a tenant for a plurality of resource pools may be that any two resource pools in the plurality of resource pools communicate with each other. Alternatively, a communication requirement of a tenant for a plurality of resource pools is that some resource pools in the plurality of resource pools communicate with each other, and some resource pools cannot communicate with each other. For example, in FIG. 6, the resource pool 1 and the resource pool 2 communicate with each other, the resource pool 2 and the resource pool 3 do not communicate with each other, and the like. Correspondingly, the cloud management platform 100 provides a topology policy and the like for the tenant to specify whether there may be a connection between resource pools connected to two endpoints.

Correspondingly, as shown in FIG. 13, the tenant may add one or more endpoint pairs. Assuming that an endpoint 1 and an endpoint 3 are selected or entered in a configuration item of one of the endpoint pairs, and a connection option is selected as allowed, it indicates that the endpoint 1 and the endpoint 3 communicate with each other, that is, a connection is allowed or there is a connection between a resource pool 1 connected to the endpoint 1 and a resource pool 3 connected to the endpoint 3. For another example, if another endpoint pair is configured as an endpoint 2 and an endpoint 3, and a connection option is forbidden, it indicates that the endpoint 2 and the endpoint 3 do not communicate with each other, that is, a connection is not allowed or there is no connection between a resource pool 2 connected to the endpoint 2 and a resource pool 3 connected to the endpoint 3.

In an optional implementation, if there is a connection between endpoints in a segment by default, the tenant only needs to add an endpoint pair with two endpoints between which a connection is not allowed, and set a connection of the endpoint pair as forbidden, and does not need to repeatedly add an endpoint pair that has a connection by default. In this way, when a quantity of endpoint pairs between which a connection is not allowed is small, the tenant only needs to configure a few topology policies. This simplifies a configuration procedure of the tenant and saves time of a user. On the contrary, if there is no connection between endpoints in a segment by default, the tenant only needs to add an endpoint pair with two endpoints between which a connection is allowed, and set a connection of the endpoint pair as allowed, and does not need to repeatedly set an endpoint pair that has no connection by default. Optionally, whether there is a connection between endpoints in the segment by default may be set.

### III. Routing policy

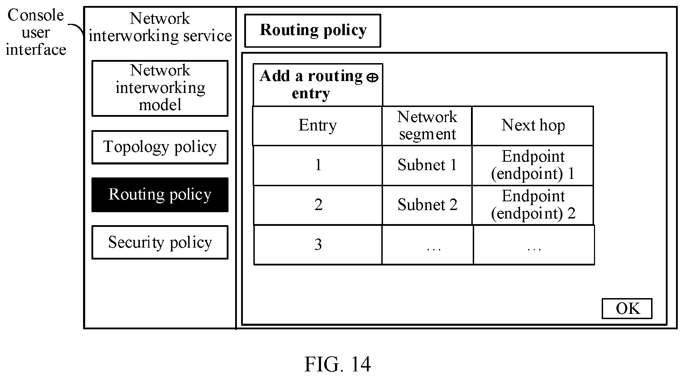

FIG. 14 is a diagram of a user interface of a routing policy according to an embodiment of this application. The routing policy includes a route table of a segment in a network interworking model. One or more routing entries may be flexibly added to the route table, and each routing entry includes a network segment and a next hop of the network segment.

It should be noted that the foregoing routing entry may be automatically generated based on an endpoint configured by a tenant. For example, after configuring the endpoint in FIG. 12, the tenant clicks an OK button. The cloud management platform 100 creates a route table of a segment based on a network interworking model configured by the tenant, or the tenant may manually add or modify the route table. For details, refer to related descriptions in FIG. 8. Details are not described herein again. In addition, the routing entry shown in FIG. 14 is merely an example, and is not all routing entries of one segment.

### IV. Security policy

The security policy may be used to configure a traffic protection degree between connected resource pools, to ensure traffic security between the resource pools. For example, the security policy in this embodiment includes a local security policy and an inter-domain security policy. The local security policy is used to protect traffic security of computing nodes in the resource pool. The inter-domain security policy is used to protect inter-domain traffic security.

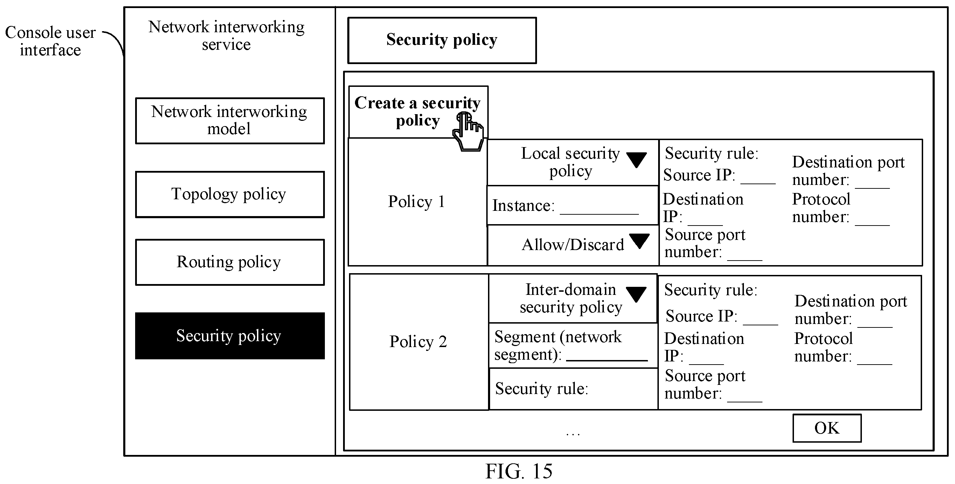

FIG. 15 is a diagram of a user interface of a security policy according to an embodiment of this application. As shown in FIG. 15, after adding a security policy to the user interface, a tenant may select a type of the security policy as a local security policy or an inter-domain security policy.

The local security policy includes but is not limited to one or more of the following:
(1) Instance: indicating a location in which the local security policy takes effect, for example, an IP address of a computing node in a site (for example, a resource pool).
(2) Security rule: matched packet identifier and behavior. The packet identifier may include quintuple information of a packet, such as a source IP address, a destination IP address, a source port number (port), a destination port number (port), and a protocol number. The behavior includes allow and discard.

For example, still referring to FIG. 15, the tenant may enter or select, in an instance configuration item, a computing node/computing instance in a resource pool 1 and the like. For example, a configuration process may include: The tenant first selects the resource pool 1 from a candidate list of the instance configuration item. After the resource pool 1 is selected, the user interface may further display information, such as an IP address, about the computing node/computing instance included in the resource pool 1 for a user to continue to select. Alternatively, the tenant may directly enter an IP address of the computing node/computing instance in the instance configuration item.

In a security rule configuration item, the packet identifier includes fields respectively corresponding to the quintuple information. The tenant may selectively configure some or all of the fields. For example, an IP address (for example, 1.1.0.1) of the computing instance 2 in the resource pool 1 is entered as a source IP address, discard is selected in a behavior configuration item, and another field may not be configured. It is assumed that the tenant selects the computing instance 1 (assuming that an IP address is 1.1.0.0) in the resource pool 1 in the instance configuration item, and the computing instance 1 is located on a computing node 1. In this case, when the computing node 1 receives a packet whose source IP address is 1.1.0.1, that is, receives a packet from the computing instance 2, the computing node 1 discards the packet. If the behavior configuration item is allow, the packet is not discarded, and the computing node 1 normally processes the packet, for example, forwards the packet to the computing instance 1.

It should be noted that the foregoing is merely an example. The tenant may set only one or more remaining fields or all remaining fields in the quintuple information. This is not limited in this application. In addition, it should be noted that, because the local security policy does not depend on a security gateway, the local security policy may not be executed depending on a security model, that is, the local security policy may be deployed in the system shown in FIG. 6.

The inter-domain security policy includes but is not limited to one or more of the following:
(1) Network segment: indicating a location in which inter-domain security takes effect, for example, a segment. When the effective location is a segment, an actual effective location includes some or all security gateways in a resource pool included in the segment.
(2) Security rule: matched packet identifier and behavior. Similarly, the packet identifier may include quintuple information of a packet, such as a source IP address, a destination IP address, a source port, a destination port, and a protocol number. The behavior includes forward and discard.

For example, still referring to FIG. 15, the tenant configures an inter-domain security policy, where a security rule includes that a source IP address is an IP address of the computing instance 1 in the resource pool 1, and a destination IP address is an IP address of a computing instance 3 in the resource pool 2. It should be understood that, after receiving a packet, an inter-domain gateway sends the packet to a security gateway for filtering. When a security gateway in the resource pool 1 or a security gateway in the resource pool 2 receives a packet whose source IP address is the IP address of the computing instance 1 and whose destination IP address is the IP address of the computing instance 3, the packet is discarded.

It should be noted that the foregoing merely lists several parameters as an example. Parameters included in the network interworking service in this embodiment of this application are not limited thereto. In actual application, more or fewer parameters may be included, and a parameter included in any function related to managing communication across resource pools is applicable to this embodiment.

Configuration manner 2: Perform configuration on the API.

In addition to providing the user interface, the cloud management platform 100 may further provide the API for the tenant to perform configuration, and the tenant may configure, based on the communication requirement of the tenant for the plurality of resource pools, a service parameter similar to that included in the user interface. For example, the cloud management platform 100 may display an API format on a web page provided by the internet, where the API format may include a plurality of fields and usage of each field. For example, the API format includes a name of "segment _name":,//segment. The "segment_name":, indicates a field, and the related note following // indicates usage of the field. After viewing the API format displayed on the web page, the tenant fills in corresponding parameters based on the API format. For example, the tenant fills in the business 1 network after the "segment_name": that is, "segment_name": "business 1 network", indicating that the segment name is the business 1 network. It should be understood that the API format includes fields corresponding to all service parameters of the network interworking service, and the tenant sequentially enters parameters corresponding to all the fields.

The tenant may send, to the cloud management platform 100 in a template manner by using the internet, the API for which the parameter is entered, and the cloud management platform 100 detects parameters corresponding to different fields in the API, to obtain requirements that are of the tenant and that correspond to the different fields of the API. Therefore, in this embodiment, the service configuration information includes the API field and the parameter entered by the tenant.

It should be noted that, regardless of the user interface or the API, in the network interworking service, other configuration items except a basic attribute are not mandatory configuration items, or the tenant does not necessarily configure all parameters. For example, the service configuration information may include only a basic attribute configuration item of the network interworking model and some or all corresponding parameters. On this basis, the service configuration information may further include a configuration item included in the topology policy of the network interworking model and some or all corresponding parameters. Alternatively, the service configuration information may further include a configuration item included in the security policy of the network interworking model, some or all corresponding parameters, and the like.

After the service configuration information is configured, the cloud management platform 100 may map the service configuration information to each corresponding resource pool of the tenant by using the cloud service system 200, and finally make the service configuration information take effect in each resource pool, to implement automatic network connection at an IaaS layer (refer to the following steps).

Step 1102: The cloud management platform 100 sends the service configuration information to the global controller 201.

After the global controller 201 receives the service configuration information, the global controller 201 performs step 1103. Optionally, the global controller 201 may further write the service configuration information into a persistent storage medium such as a hard disk at the global layer, to persistently store the service configuration information of the tenant. Optionally, after the network interworking service subscribed by the tenant expires and it is confirmed that the network interworking service is not to be renewed, the service configuration information may be deleted, to release storage space at the global layer.

Step 1103: The global controller 201 sends the service configuration information/network configuration information (denoted as first configuration information) to a local controller corresponding to each resource pool in the plurality of resource pools.

A specific implementation procedure of step 1103 may include: The global controller 201 invokes an API of each local controller, to send the service configuration information to the local controller corresponding to each resource pool. Each resource pool herein is the plurality of resource pools of the tenant that are indicated by the service configuration information. The local controller corresponding to the resource pool is a local controller allocated to manage the resource pool, for example, in FIG. 6, the local controller 211 corresponding to the resource pool 1, the local controller 212 corresponding to the resource pool 2, and the local controller 213 corresponding to the resource pool 3. A correspondence between the resource pool and the local controller may be preset in the global controller 201. Still using the plurality of resource pools shown in FIG. 6 as an example, a correspondence between the plurality of resource pools and the local controller may be preset in the global controller 201 after the cloud service system 200 is created. In this way, the global controller 201 may determine, based on the correspondence, the local controller corresponding to each resource pool of the tenant, to send the service configuration information to each local controller. Specifically, when performing step 1103, the global controller 201 invokes APIs of the local controller 211, the local controller 212, the local controller 213, and the local controller 214 respectively, to send the service configuration information to the local controller 211, the local controller 212, the local controller 213, and the local controller 214 separately. In this case, each local controller receives the same service configuration information.

In an alternative solution of step 1103, the global controller may further determine the network configuration information based on the service configuration information, where the network configuration information includes some information in the service configuration information. The global controller sends the network configuration information to each local controller. Even so, the global controller 201 still sends the network configuration information to each local controller in a plurality of manners.

In an implementation, network configuration information sent by the global controller 201 to each local controller is the same. For example, in FIG. 6, the global controller 201 sends the same network configuration information to the local controller 211, the local controller 212, the local controller 213, and the local controller 214 separately. That is, network configuration information received by local controllers corresponding to resource pools is the same. The network configuration information may be some information in the service configuration information. For example, the network configuration information does not include the segment description information, or lacks information that is not required by the local controller.

In another implementation, network configuration information sent by the global controller 201 to each local controller is completely different or not completely the same. For example, using one resource pool as an example, the global controller 201 may send, to a local controller corresponding to the resource pool, information (that is, network configuration information) that is in the service configuration information and that is only related to the resource pool. For example, the global controller 201 sends a local security policy only related to the resource pool 1 to the local controller corresponding to the resource pool 1, and does not need to send the policy to a local controller corresponding to another resource pool, to save a network bandwidth. In this case, the global controller 201 may generate or obtain through division, based on the network service information, network configuration information corresponding to each resource pool. The network configuration information corresponding to each resource pool includes information required for a local controller corresponding to the resource pool to manage a resource in the resource pool, and includes but is not limited to at least one of a configuration item and a parameter of a network interworking model, a topology policy related to an endpoint connected to the resource pool, a routing entry, a security policy, and the like.

After the local controller receives the service configuration information/network configuration information, optionally, the local controller may store the service configuration information/network configuration information in a persistent storage medium at a local layer. Optionally, after the network interworking service subscribed by the tenant expires and it is confirmed that the network interworking service is not to be renewed, the service configuration information may be deleted, to release storage space at the local layer.

Step 1104: The local controller sends network configuration information (denoted as second configuration information) to the inter-domain gateway in the resource pool.

For ease of differentiation, the service configuration information/network configuration information sent by the global controller to the local controller is referred to as the first configuration information, and the network configuration information sent by the local controller to the inter-domain gateway is referred to as the second configuration information below.

The resource pool 1 is used as an example. The local controller 211 generates the second configuration information based on the first configuration information, and sends the second configuration information to the inter-domain gateway 311.

Specifically, the second configuration information may include indication information that indicates the inter-domain gateway 311 to establish a VxLAN tunnel with the forwarding node 321. The inter-domain gateway 311 establishes the VxLAN tunnel with the forwarding node 321 based on the second configuration information. Optionally, the second configuration information may further include indication information for establishing a network connection between inter-domain gateways. For example, if the topology policy in the first configuration information indicates that the resource pool 1 and the resource pool 2 communicate with each other, the second configuration information includes indication information indicating the inter-domain gateway 311 to establish a VxLAN tunnel with the inter-domain gateway 312. For example, the indication information further includes information required for establishing the VxLAN tunnel, for example, an outer IP address of VxLAN tunnel encapsulation performed by the inter-domain gateway 312, a VNI of the VxLAN tunnel encapsulation, and the like.

Step 1105: The local controller in the resource pool sends routing information to the intra-site controller in the resource pool.

To unify and simplify a resource pool management manner, this embodiment of this application provides several APIs. The following separately describes in detail the several APIs.

The following uses the local controller 211 as an example. A specific procedure in which the local controller 211 performs step 1105 may include: The local controller 211 invokes an API (denoted as a first API) that is used by the intra-site controller 301 in the resource pool to deliver the routing information, to generate the routing information, and sends the routing information to the intra-site controller 301.

The first API is a standard API defined in this embodiment for delivering the routing information. In a specific implementation, a plug-in (for example, a plugin) or a software program that can implement the first API is installed and run on the intra-site controller 301 in the resource pool. The plug-in or the software program may be installed on the intra-site controller 301 when the cloud service system 200 is established, or the local controller 211 instructs the intra-site controller 301 to download and install the plug-in or the software program, or the local controller 211 sends the plug-in or the software program to the intra-site controller 301, and instructs the intra-site controller 301 to install the plug-in or the software program. A specific implementation is not limited.

For example, a format of the first API includes but is not limited to one or more of the following:
(1) Type of a next hop: indicating a type of a next hop that is encapsulated on a data plane, where for example, the type of the next hop may be a VxLAN, a GRE, or another overlay protocol.
(2) VNID used for VxLAN encapsulation of a packet: Next hop information is a VNI. In this embodiment, a VxLAN network formed by every two resource pools shares one VNI. For example, if the resource pool 1 and the resource pool 2 communicate with each other, the resource pool 1 and the resource pool 2 share one VNI. If the resource pool 1 and the resource pool 3 communicate with each other, the resource pool 1 and the resource pool 3 share one VNI.
(3) remote_ip: an outer destination IP address of tunnel encapsulation, for example, the VxLAN tunnel established between the forwarding node 321 and the inter-domain gateway 311 that are in the resource pool 1. The routing information is used by the forwarding node 321 to encapsulate a packet sent by the computing instance in the resource pool 1 into a VxLAN packet and send the VxLAN packet to the inter-domain gateway 311 in the resource pool 1. In this case, remote_ip is an IP address of the inter-domain gateway 311.
(4) Address of router mac: inner destination MAC of tunnel encapsulation. For example, in the foregoing example, the inter-domain gateway 311 is used as MAC of the VTEP endpoint.

The local controller 211 requests to invoke the first API from the intra-site controller 301. The intra-site controller 301 provides the first API to the local controller 211. The local controller generates the routing information based on the received network configuration information and the format of the first API, and the local controller sends the routing information to the intra-site controller 301 (refer to step 1105).

It should be noted that the local controller performing step 1105 may be some or all of the plurality of local controllers in the service configuration information. For example, because no intra-site controller is deployed in the conventional resource pool, the local controller 214 does not need to perform step 1105.

Step 1106: The intra-site controller sends the routing information to the forwarding node in the resource pool.

Refer to FIG. 9 for understanding. A plurality of forwarding nodes (for example, computing nodes) may exist in a same resource pool. For brevity, only a process of delivering the routing information to one forwarding node is shown herein. Actually, the local controller may deliver the routing information to each forwarding node. Details are not described herein.

After obtaining the routing information, the forwarding node 321 may encapsulate, based on the routing information, a packet (for example, an Ethernet packet) sent by the computing instance into a VxLAN packet, and send the VxLAN packet to the inter-domain gateway 311 through the VxLAN tunnel. It can be learned that no additional gateway needs to be used between the forwarding node and the inter-domain gateway in the resource pool. When the forwarding node is a computing node, the computing node and the inter-domain gateway can be directly connected in one hop, implementing an optimal path.

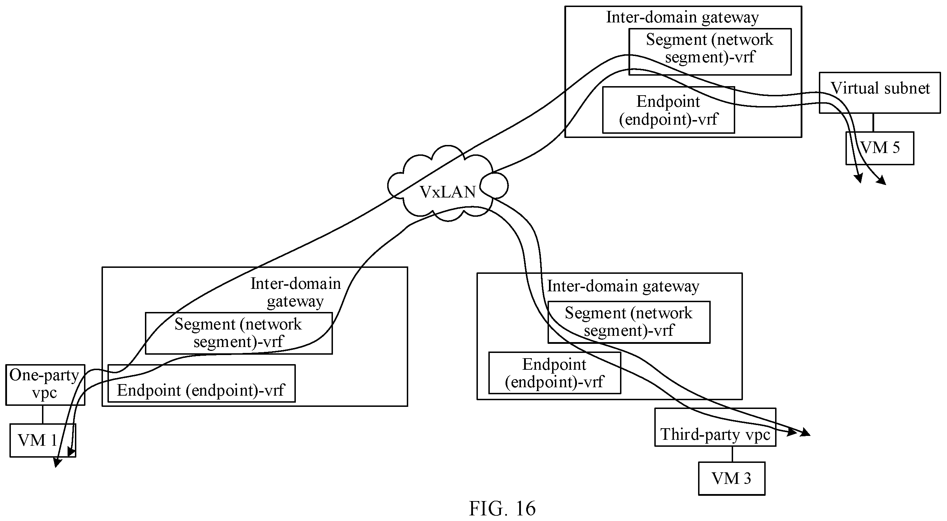

In a possible case, the Ethernet packet is a packet sent by the computing instance 1 in the resource pool 1 to the computing instance 3 in another resource pool, for example, the resource pool 2. After receiving the VxLAN packet sent by the forwarding node 321, the inter-domain gateway 311 re-encapsulates the VxLAN packet, for example, changes an outer destination IP address of the VxLAN packet to an IP address of the inter-domain gateway 312, and changes a VNI to a VNI shared by the resource pool 1 and the resource pool 2. Details are not described herein. Then, a re-encapsulated VxLAN packet is sent to the inter-domain gateway 312 through the VxLAN tunnel between the inter-domain gateway 311 and the inter-domain gateway 312. FIG. 16 shows an example of a transmission path of the packet. Similarly, a packet transmission manner between a resource pool of the non-cloud type, for example, a virtual resource pool, is also the same. Details are not described herein again. It should be understood that, when a security policy is configured for the resource pool 1 or the segment, the packet shown in FIG. 16 is a packet filtered by the forwarding node or the security gateway. Refer to the foregoing descriptions. Details are not described herein again.

It should be noted that step 1104, and step 1105 and step 1106 are two independent processes, and there is no strict time sequence limitation between the two independent processes. For example, step 1104 may be performed first, and then step 1105 and step 1106 are performed, or step 1105 and step 1106 are performed first, and then step 1104 is performed.

In view of a fact that a resource change may occur in the resource pool of the cloud type, in this embodiment, the following steps are designed for the resource pool of the cloud type:
Step 1107: The local controller in the resource pool sends an event subscription request to the intra-site controller in the resource pool.

The local controller 211 invokes an API (denoted as a second API) that is used by the intra-site controller 301 in the resource pool to deliver an event subscription, to generate a subscription request, and sends the subscription request to the intra-site controller 301.

The second API is a standard API defined in this embodiment and used to deliver the event subscription. In a specific implementation, a plug-in (for example, a plugin) or a software program that can implement the second API is installed and run on the intra-site controller 301 in the cloud. Refer to related descriptions of the first API. Details are not described herein again. It should be noted that the plug-in that implements the first API and the plug-in that implements the second API may be the same or may not be the same. This is not specifically limited. For convenience, a same plug-in or software program is generally used for implementation. The following uses a plugin implementation as an example for description.

Considering that the VxLAN network is used in the cloud in this embodiment, a resource change event, for example, virtual machine migration and IP address addition or deletion, that affects a routing entry change may occur. Therefore, in this embodiment, the local controller 211 in the cloud invokes the second API in the cloud to deliver a route subscription request to the intra-site controller 301 in the cloud. When a route changes in the cloud, the intra-site controller 301 reports the resource change event to the local controller.

For example, a format of the second API includes but is not limited to one or more of the following:
(1) CIDR list: The CIDR list includes a subscribed address range, that is, all IP addresses or routing addresses in the address range are subscribed. In other words, when the IP address or the routing address in the range changes, the intra-site controller 301 needs to report a resource change event to the local controller 211.
(2) IP address of a subscriber: an IP address of the local controller 211, used by the intra-site controller 301 to send the resource change event to the local controller 211 when the resource change event occurs in the cloud.
(3) ID of a virtual private router in the cloud: an ID of a virtual private router to which the CIDR list belongs.
(4) IP address for authentication: an IP address used for authentication when the intra-site controller 301 instructs the subscriber when the resource change event occurs in the cloud.
(5) Authentication user name: a user name for authentication.
(6) Authentication password: a password of an authentication account.
(7) Tenant ID: tenant information in the cloud, for example, a tenant identifier, for uniquely identifying a tenant.

The local controller 211 requests to invoke the second API from the intra-site controller 301. The intra-site controller 301 provides the second API to the local controller 211. The local controller 211 generates a subscription request based on the received service configuration information/first configuration information and the format of the second API, and sends the subscription request to the intra-site controller 301.

Optionally, after receiving the subscription request, the intra-site controller 301 may first perform authentication on the local controller 211 based on authentication information carried in the subscription request. After the authentication succeeds, step 1107 may be performed.

Step 1108: When the resource change event occurs in the cloud, the intra-site controller sends a notification message to the local controller in the cloud.

Specifically, the intra-site controller 301 invokes an API (that is, a third API) that is used to update a routing entry and that is provided by the local controller 211 in the cloud, to generate the notification message indicating the resource change event.

The third API is a standard northbound API defined in this embodiment, and is used by the intra-site controller 301 to report the notification message indicating the resource change event.

For example, a format of the third API includes but is not limited to one or more of the following:
(1) vpc_id: an ID of the virtual private router in the cloud;
(2) ip_address: an IP address of the VPC in the cloud, including an IPv4 address or an IPv6 address, where the address may be an IP address of an object on which a resource change occurs, an IP address newly-added to the cloud, or the like, may be a network segment, or may be an IP address of a specific host (for example, a computing instance or a computing node);
(3) router_mac: an inner destination MAC address used by the inter-domain gateway in the cloud for VxLAN encapsulation; and
(4) vtep_ip: an outer destination IP address used by the inter-domain gateway in the cloud for VxLAN encapsulation.

For example, after a computing instance (for example, a virtual machine) is migrated, a computing node on which the computing instance is located changes. For example, with reference to a left side in FIG. 9, the computing instance 1 is migrated from the computing node 1 to a computing node 2. In this case, ip_address is the IP address of the computing instance 1, indicating that the object on which a resource change occurs is the computing instance 1. router_mac indicates a MAC address of the computing node 2. vtep_ip indicates an IP address of the computing node 2 that functions as a VTEP endpoint.

The intra-site controller 301 in the cloud invokes the third API of the local controller 211 in the cloud, and generates, based on the resource change event and the format of the third API, the notification message indicating the resource change event.

Step 1108: The intra-site controller 301 in the cloud sends the notification message to the local controller 211 in the cloud.

Step 1109: The local controller 211 in the cloud updates the routing information based on the notification message.

Updating the routing information includes, for example, modifying, based on the notification message, information that is about a next hop of an object on which the resource change event occurs and that is in the routing information of the inter-domain gateway 311 to related information indicated in the notification message, for example, modifying a next hop of the computing instance 1 to the IP address of the computing node 2. In this way, after receiving a packet sent to the computing instance 1, the inter-domain gateway 311 forwards the packet to the computing node 2, and then the computing node 2 forwards the packet to the computing instance 1. How to specifically update the routing information is not limited in this embodiment. In a word, updated routing information can be for implementing communication between the computing instance in the cloud and the object on which the resource change event occurs.

Subsequently, the local controller 211 in the cloud sends the updated routing information to the inter-domain gateway, and the inter-domain gateway performs VxLAN encapsulation and VxLAN packet transmission based on the updated routing information.

Further, after the tenant configures the security policy, the cloud management platform 100 sends the security policy to the global controller corresponding to the tenant. The global controller delivers the security policy to a local controller in a corresponding resource pool, and the local controller maps the security policy to the resource pool. For example, the local controller sends a local security policy in the security policy to an intra-site controller in the resource pool, and the intra-site controller implements the local security policy by using an existing security capability in the resource pool, to ensure traffic security in the pool. For another example, an edge controller node sends an inter-domain security policy including the security policy to a security gateway in the resource pool, and the security gateway implements the inter-domain security policy, to ensure inter-domain traffic security.

In the foregoing design, traffic protection at different granularities may be implemented by using a security rule configuration, to meet traffic security and flexibility of interworking across a plurality of resource pools.

It should be noted that, the foregoing uses the resource pool 1 as an example to describe an information exchange procedure in the resource pool of the cloud type. Similar operations are also performed in a resource pool of another cloud type, for example, the resource pool 2. Details are not described herein again. In addition, because a pure VLAN network is used in the virtual resource pool, no resource change exists, step 1108 and step 1109 do not need to be performed in the virtual resource pool. However, no intra-site controller is deployed in the conventional resource pool, and there is no automatic control. Therefore, in step 1104, the local controller in the conventional resource pool only needs to control the inter-domain gateway to access the VLAN network, and does not need to interact with the resource pool. That is, step 1105 to step 1109 do not need to be performed in the conventional resource pool.

In conclusion, this embodiment provides a general-purpose solution for supporting automatic network interworking between resource pools of different vendors, supports access of resource pools of various types such as a cloud type (including a homogeneous cloud and a heterogeneous cloud), a virtual resource pool, and a conventional resource pool, supports VxLAN encapsulation by using hardware devices or software in the resource pool, and provides an optimal data plane traffic path. In addition, the inter-domain gateway and security gateway support hardware or software, to meet requirements of a plurality of scenarios. The tenant configures the service configuration information on the cloud management platform. The cloud management platform maps the service configuration information to each resource pool to manage networks and security of a plurality of resource pools of the tenant. This solution can enable the tenant to implement unified deployment, management, and operations and maintenance of a multi-resource pool interworking network, simplifying a use requirement of the tenant for a multi-cloud multi-resource pool system.

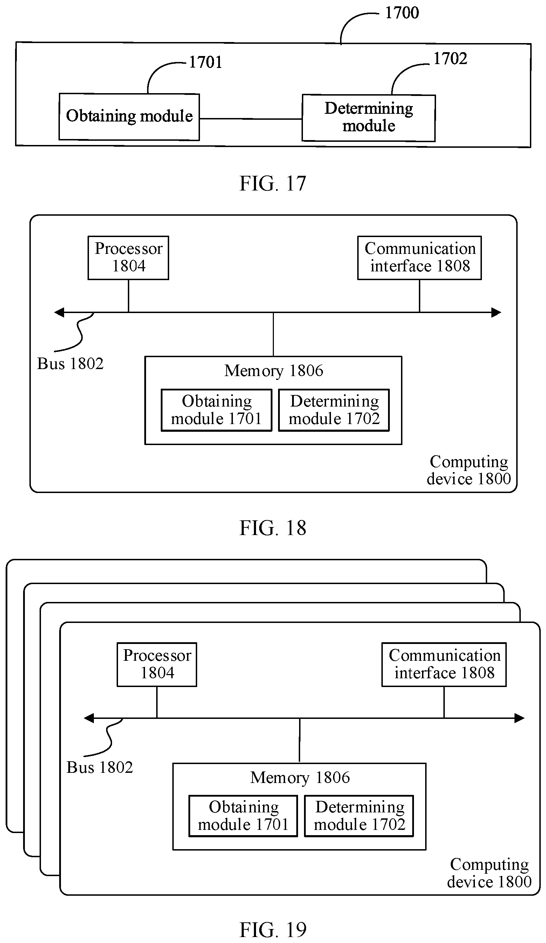

Based on a same inventive concept as the method embodiment, an embodiment of this application further provides a cloud management platform. The cloud management platform is configured to perform the method performed by the cloud management platform in the method embodiment in FIG. 11. As shown in FIG. 17, the cloud management platform 1700 includes an obtaining module 1701 and a determining module 1702. Specifically, in the cloud management platform 1700, a connection is established between modules through a communication path.

The obtaining module 1701 is configured to obtain service configuration information configured by a tenant on the cloud management platform, where the service configuration information includes one or more of the following: a network identifier, a terminal node identifier, and a terminal node type. The network identifier indicates identifiers of networks including at least two resource pools that establish a network connection, each terminal node corresponds to one resource pool, the resource pools correspond to a plurality of service providers, each resource pool includes a plurality of computing nodes, the plurality of computing nodes are used to run a business of the tenant, and the terminal node type indicates a type of a resource pool corresponding to the terminal node. For details, refer to the descriptions in step 1102. Details are not described herein again.

The determining module 1702 is configured to create corresponding terminal nodes for the at least two resource pools based on the terminal node type. For details, refer to the descriptions in step 1102. Details are not described herein again.

In a possible implementation, the service configuration information further includes one or more of the following:
a terminal node pair, and a connection status of the terminal node pair.

The terminal node pair includes two terminal nodes, and the connection status of the terminal node pair includes connection allowed and/or connection forbidden.

In a possible implementation, the service configuration information further includes a routing rule between a network segment included in at least one resource pool and the terminal node.

In a possible implementation, the service configuration information further includes a local security policy and an inter-domain security policy.

In a possible implementation, the obtaining module 1701 is further configured to obtain one or more of the following configured by the tenant on the cloud management platform: a type of the resource pool, location information of the resource pool, private network VPC information of the resource pool, subnet information of the resource pool, information about an interface for an inter-domain gateway in the resource pool to access the resource pool, and virtual local area network VLAN information.

In a possible implementation, the type of the resource pool includes: a homogeneous cloud, a heterogeneous cloud, a virtual resource pool, and a conventional resource pool.

For example, the following uses the determining module 1702 in the cloud management platform 1700 as an example to describe an implementation of the determining module 1702. Similarly, for an implementation of the obtaining module 1701, refer to the implementation of the determining module 1702.

When implemented by using software, the determining module 1702 may be an application program or a code block that is run on a computer device. The computer device may be at least one of computing devices such as a physical host, a virtual machine, and a container. Further, there may be one or more computer devices. For example, the determining module 1702 may be an application program run on a plurality of hosts/virtual machines/containers. It should be noted that the plurality of hosts/virtual machines/containers configured to run the application program may be distributed in a same availability zone (availability zone, AZ), or may be distributed in different AZs. The plurality of hosts/virtual machines/containers configured to run the application program may be distributed in a same region (region) or may be distributed in different regions. Generally, one region may include a plurality of AZs.

Similarly, the plurality of hosts/virtual machines/containers configured to run the application program may be distributed in a same virtual private cloud (virtual private cloud, VPC), or may be distributed in a plurality of VPCs. Generally, one region may include a plurality of VPCs, and one VPC may include a plurality of AZs.

When implemented by using hardware, the determining module 1702 may include at least one computing device, such as a server. Alternatively, the determining module 1702 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

The plurality of computing devices included in the determining module 1702 may be distributed in a same AZ, or may be distributed in different AZs. The plurality of computing devices included in the determining module 1702 may be distributed in a same region, or may be distributed in different regions. Similarly, the plurality of computing devices included in the determining module 1702 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in embodiments of this application, division into modules is an example, and is merely logical function division. During actual implementation, another division manner may be used. Functional modules in embodiments of this application may be integrated into one module, or each of the modules may exist alone physically, or two or more modules are integrated into one module. For example, a first obtaining module and a second obtaining module are integrated into one module, or the first obtaining module and the second obtaining module are a same module. Similarly, a first determining module and a second determining module are integrated in one module, or the first determining module and the second determining module are a same module. The integrated unit may be implemented in a form of hardware, or may be implemented in a form of a software functional unit.

This application further provides a computing device 1800. As shown in FIG. 18, the computing device 1800 includes a bus 1802, a processor 1804, a memory 1806, and a communication interface 1808. The processor 1804, the memory 1806, and the communication interface 1808 communicate with each other through the bus 1802. The computing device 1800 may be a server or a terminal device. It should be understood that quantities of processors and memories in the computing device 1800 are not limited in this application.

The bus 1802 may be a peripheral component interconnect (peripheral component interconnect, PCI) bus, an extended industry standard architecture (extended industry standard architecture, EISA) bus, and or the like. Buses may be classified into an address bus, a data bus, a control bus, and the like. For ease of representation, only one line is used in FIG. 18 for representation, but it does not mean that there is only one bus or only one type of bus. The bus 1802 may include a path for transmitting information between components (for example, the memory 1806, the processor 1804, and the communication interface 1808) of the computing device 1800.

The processor 1804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1806 may include a volatile memory (volatile memory), for example, a random access memory (random access memory, RAM). The processor 1804 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1806 stores executable program code, and the processor 1804 executes the executable program code to separately implement functions of the obtaining module 1701 and the determining module 1702, to implement a management method for a multi-resource pool network. In other words, the memory 1806 stores instructions used by the cloud management platform 1700 to perform the management method for the multi-resource pool network provided in this application.

The communication interface 1808 implements communication between the computing device 1800 and another device or a communication network by using a transceiver module, for example, but not limited to a network interface card or a transceiver.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

As shown in FIG. 19, the computing device cluster includes at least one computing device 1800. A memory 1806 in one or more computing devices 1800 in the computing device cluster may store same instructions used to perform a resource allocation method.

In some possible implementations, the memory 1806 in the one or more computing devices 1800 in the computing device cluster may alternatively separately store some instructions used to perform a resource allocation method. In other words, a combination of the one or more computing devices 1800 may jointly execute the instructions used to perform the resource allocation method.

It should be noted that memories 1806 in different computing devices 1800 in the computing device cluster may store different instructions, and are respectively used to perform some functions of a computing apparatus. In other words, the instructions stored in the memories 1806 in different computing devices 1800 may implement functions of one or more of the obtaining module 1701 and the determining module 1702.

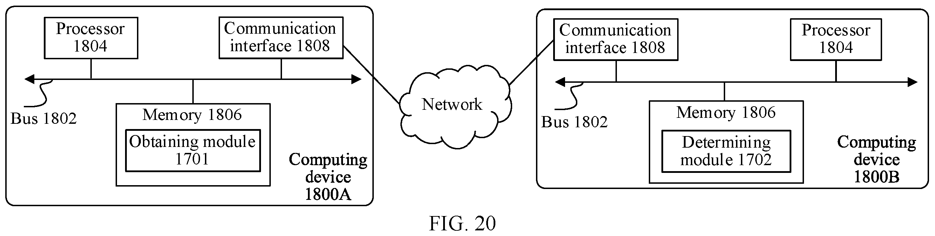

In some possible implementations, the one or more computing devices in the computing device cluster may be connected through a network. The network may be a wide area network, a local area network, or the like. FIG. 20 shows a possible implementation. As shown in FIG. 20, two computing devices 1800A and 1800B are connected through a network. Specifically, each computing device is connected to the network through a communication interface of the computing device. In this possible implementation, a memory 1806 in the computing device 1800A stores instructions used to perform a function of an obtaining module 1701. In addition, a memory 1806 in the computing device 1800B stores instructions used to perform a function of a determining module 1702.

It should be understood that functions of the computing device 1800A shown in FIG. 20 may alternatively be implemented by a plurality of computing devices 1800. Similarly, functions of the computing device 1800B may alternatively be implemented by the plurality of computing devices 1800.

An embodiment of this application further provides another computing device cluster. For a connection relationship between computing devices in the computing device cluster, refer to the connection manner of the computing device cluster in FIG. 19 and FIG. 20 similarly. A difference lies in that a memory 1806 in one or more computing devices 1800 in the computing device cluster may store same instructions used to perform a resource management method.

In some possible implementations, the memory 1806 in the one or more computing devices 1800 in the computing device cluster may alternatively separately store some instructions used to perform a resource management method. In other words, a combination of the one or more computing devices 1800 may jointly execute the instructions used to perform the resource management method.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the resource management method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a computing device to perform a resource management method.

Optionally, the computer-executable instructions in this embodiment of this application may also be referred to as application program code. This is not specifically limited in this embodiment of this application.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A management method for a multi-resource pool network, applied to a cloud management platform, wherein the cloud management platform is configured to manage a plurality of resource pools, and the method comprises:
obtaining, by the cloud management platform, service configuration information configured by a tenant on the cloud management platform, wherein the service configuration information comprises one or more of the following:
a network identifier, a terminal node identifier, and a terminal node type, wherein
the network identifier indicates identifiers of networks comprising at least two resource pools that establish a network connection, each terminal node corresponds to one resource pool, the resource pools correspond to a plurality of service providers, each resource pool comprises a plurality of computing nodes, the plurality of computing nodes are used to run a business of the tenant, each terminal node identifier identifies one of at least one resource pool, and the terminal node type indicates a type of the resource pool indicated by the terminal node identifier; and
creating, by the cloud management platform, corresponding terminal nodes for the at least two resource pools based on the terminal node type.

2. The method according to claim 1, wherein the service configuration information further comprises one or more of the following:
a terminal node pair, and a connection status of the terminal node pair, wherein
the terminal node pair comprises two terminal nodes, and the connection status of the terminal node pair comprises connection allowed and/or connection forbidden.

3. The method according to claim 1 or 2, wherein the service configuration information further comprises a routing rule between a network segment comprised in the at least one resource pool and the terminal node.

4. The method according to any one of claims 1 to 3, wherein the service configuration information further comprises a local security policy and an inter-domain security policy.

5. The method according to any one of claims 1 to 4, wherein the method further comprises:
obtaining one or more of the following configured by the tenant on the cloud management platform:
a type of the resource pool, location information of the resource pool, private network VPC information of the resource pool, subnet information of the resource pool, information about an interface for an inter-domain gateway in the resource pool to access the resource pool, and virtual local area network VLAN information.

6. The method according to claim 2, wherein the cloud management platform is further configured to manage a cloud service system, the cloud service system comprises a global controller and at least two local controllers, and one local controller corresponds to one of the at least two resource pools; and
the method further comprises:
obtaining, by the global controller, the service configuration information from the cloud management platform; and
sending, by the global controller, the service configuration information to each local controller.

7. The method according to claim 6, wherein the method further comprises:
invoking, by the local controller, a first application programming interface API of an intra-site controller in a corresponding resource pool to send routing information to the intra-site controller.

8. The method according to claim 7, wherein the routing information comprises some or all of the following:
a type of a next hop, a VNID of network virtualization technology VxLAN tunnel encapsulation, an outer destination internet protocol IP address of the VxLAN tunnel encapsulation, and an outer destination local area network address MAC address of the VxLAN tunnel encapsulation.

9. The method according to any one of claims 6 to 8, wherein the method further comprises:
invoking, by the local controller, a second application programming interface API of the intra-site controller in the corresponding resource pool to send a subscription request to the intra-site controller, wherein the subscription request is used to request to subscribe to a resource change event in the resource pool.

10. The method according to claim 9, wherein the method further comprises:
invoking, by the intra-site controller in the resource pool, a third API of the local controller corresponding to the resource pool to send a notification message to the local controller, wherein the notification message indicates the resource change event in the resource pool.

11. The method according to any one of claims 1 to 10, wherein the type of the resource pool comprises: a homogeneous cloud, a heterogeneous cloud, a virtual resource pool, and a conventional resource pool.

12. A cloud management platform, wherein the cloud management platform comprises:
an obtaining module, configured to obtain service configuration information configured by a tenant on the cloud management platform, wherein the service configuration information comprises one or more of the following:
a network identifier, a terminal node identifier, and a terminal node type, wherein
the network identifier indicates identifiers of networks comprising at least two resource pools that establish a network connection, each terminal node corresponds to one resource pool, the resource pools correspond to a plurality of service providers, each resource pool comprises a plurality of computing nodes, the plurality of computing nodes are used to run a business of the tenant, and the terminal node type indicates a type of a resource pool corresponding to the terminal node; and
a creation module, configured to create corresponding terminal nodes for the at least two resource pools based on the terminal node type.

13. The cloud management platform according to claim 12, wherein the service configuration information further comprises one or more of the following:
a terminal node pair, and a connection status of the terminal node pair, wherein
the terminal node pair comprises two terminal nodes, and the connection status of the terminal node pair comprises connection allowed and/or connection forbidden.

14. The cloud management platform according to claim 12 or 13, wherein the service configuration information further comprises a routing rule between a network segment comprised in at least one resource pool and the terminal node.

15. The cloud management platform according to any one of claims 12 to 14, wherein the service configuration information further comprises a local security policy and an inter-domain security policy.

16. The cloud management platform according to any one of claims 12 to 15, wherein the obtaining module is further configured to obtain one or more of the following configured by the tenant on the cloud management platform:
a type of the resource pool, location information of the resource pool, private network VPC information of the resource pool, subnet information of the resource pool, information about an interface for an inter-domain gateway in the resource pool to access the resource pool, and virtual local area network VLAN information.

17. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 11.

18. A computer program product comprising instructions, wherein when the instructions are run by a computing device cluster, the computing device cluster is enabled to perform the method according to any one of claims 1 to 11.

19. A computer-readable storage medium, comprising computer program instructions, wherein when the computer program instructions are executed by a computing device cluster, the computing device cluster performs the method according to any one of claims 1 to 11.
